(19) Europäisches Patentamt
European Patent Office
Office européen des brevets

(11) **EP 1 213 293 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(51) Int Cl.[7]: **C07F 7/28**, C09K 19/00

(21) Anmeldenummer: **01128679.6**

(22) Anmeldetag: **01.12.2001**

(54) **Verwendung von chiralen, ungeladenen Metallverbindungen als Dotierstoffe für flüssigkristalline Materialien**

Use of chiral, uncharged metal compounds as doting agents for liquid crystals

Utilisation des composés métalliques chiraux, non-chargé, comme agent dotant pour des matériaux de cristaux liquides

(84) Benannte Vertragsstaaten:
**CH DE FR GB IT LI NL**

(30) Priorität: **11.12.2000 DE 10061625**

(43) Veröffentlichungstag der Anmeldung:
**12.06.2002 Patentblatt 2002/24**

(73) Patentinhaber: **BASF AKTIENGESELLSCHAFT**
**67056 Ludwigshafen (DE)**

(72) Erfinder:
- **Prechtl, Frank, Dr.**
  **60318 Frankfurt (DE)**
- **Haremza, Sylke, Dr.**
  **69151 Neckargemünd (DE)**
- **Parker, Robert**
  **68161 Mannheim (DE)**
- **Kürschner, Kathrin, Dr.**
  **68199 Mannheim (DE)**
- **Braun, Manfred, Prof.Dr.**
  **67105 Schifferstadt (DE)**
- **Hahn, Antje**
  **40229 Düsseldorf (DE)**
- **Fleischer, Ralf, Dr.**
  **Houston, Texas 77027 (US)**

(56) Entgegenhaltungen:
**EP-A- 1 038 941**
**WO-A-95/01410**
**WO-A-98/47979**

- **FLEISCHER, RALF ET AL: "Synthesis and structure determination of novel chiral imine-alkoxytitaniu complexes" EUR. J. ORG. CHEM., Nr. 6, 1998, Seiten 1063-1070, XP002193353**

EP 1 213 293 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft die Verwendung von chiralen, ungeladenen Verbindungen der allgemeinen Formel Ia

$$[(P^1\text{-}Y^1\text{-}A^1\text{-}Y^2\text{-}M^1\text{-}Y^3\text{-})_nL]_2Me \qquad \text{(Ia)}$$

oder Ib

$$[(P^1\text{-}Y^1\text{-}A^1\text{-}Y^2\text{-}M^1\text{-}Y^3\text{-})_nL]Me\ (L'\ (\text{-}Y^6\text{-}M^2\text{-}Y^5\text{-}A^2\text{-}Y^4\text{-}P^2)_{n'})_m \qquad \text{(Ib),}$$

in welchen unabhängig voneinander bedeuten

| | |
|---|---|
| $P^1$, $P^2$ | Wasserstoff, $C_1$-$C_{12}$-Alkyl, eine polymerisierbare oder zur Polymerisation geeignete Gruppe oder ein Rest, welcher eine polymerisierbare oder zur Polymerisation geeignete Gruppe trägt, |
| $Y^1$ bis $Y^6$ | eine chemische Einfachbindung, -O-, -S-, -CO-, -CO-O-, -O-CO-, -CO-N(R)-, -(R)N-CO-,-O-CO-O-, -O-CO-N(R)-, - (R)N-CO-O- oder -(R)N-CO-N(R)-, |
| R | Wasserstoff oder $C_1$-$C_4$-Alkyl, |
| $A^1$, $A^2$ | Spacer mit ein bis 30 Kohlenstoffatomen, |
| $M^1$, $M^2$ | mesogene Gruppen, |
| n', | n Werte von 0 oder 1 |
| m | ein Wert von 1, 2 oder 3, wobei die m Gruppierungen L' $(\text{-}Y^6\text{-}M^2\text{-}Y^5\text{-}A^2\text{-}Y^4\text{-}P^2)_{n'}$ in Formel Ib unterschiedlich sein können, |
| Me | ein Übergangsmetall der vierten, fünften oder sechsten Periode, mit Ausnahme von Technetium, Silber, Cadmium, Gold, Quecksilber und der Lanthanoide, oder ein Hauptgruppenelement der Gruppe 14 (nach IUPAC), mit Ausnahme von Kohlenstoff und Blei, |
| L | ein dreizähniger Ligand der Formel II |

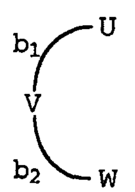

(II),

in welcher bedeuten

| | |
|---|---|
| U, V, W | stickstoff-, sauerstoff-, phosphor- oder schwefelhaltige Gruppierungen, welche über ein Stickstoff-, Sauerstoff-, Phosphor- bzw. Schwefelatom mit mindestens einem freien Elektronenpaar verfügen, über welches die Koordination an das Zentrum Me erfolgt, |
| $b_1$, $b_2$ | Alkylen- oder Alkenylenbrücken mit zwei oder drei Kohlenstoffatomen, welche an das Stickstoff-, Sauerstoff-, Phosphor- bzw. Schwefelatom der Gruppierungen U und V (für $b_1$) bzw. der Gruppierungen V und W (für $b_2$) gebunden sind und welche im Falle einer $C_2$-Alkenylenbrücke mit bis zu zwei, in den übrigen Fällen mit bis zu vier organischen Resten mit bis zu 12 Kohlenstoffatomen substituiert sein können, und in welchen zwei benachbarte Kohlenstoffatome der Alkylen- oder Alkenylenbrücke Bestandteil eines unsubstituierten oder substituierten, gegebenenfalls benzanellierten Benzolringes sein können, und |
| L' | ein organischer Rest mit bis zu 12 Kohlenstoffatomen, |

als Dotierstoffe für flüssigkristalline Materialien.

Weiter betrifft die Erfindung Verbindungen der allgemeinen Formel IIIa

$$[(P^{1'}\text{-}Y^1\text{-}A^1\text{-}Y^2\text{-}M^1\text{-}Y^3\text{-})L]_2Me \qquad \text{(IIIa)}$$

und IIIb

$$[(P^{1'}\text{-}Y^1\text{-}A^1\text{-}Y^2\text{-}M^1\text{-}Y^3\text{-})L]Me(L'\,(\text{-}Y^6\text{-}M^2\text{-}Y^5\text{-}A^2\text{-}Y^4\text{-}P^2)_{n'})_m \qquad \text{(IIIb)},$$

in welchen die Variablen $P^{1'}$ $P^{2'}$ eine polymerisierbare oder zur Polymerisation geeignete Gruppe oder ein Rest, welcher eine polymerisierbare oder zur Polymerisation geeignete Gruppe trägt, bedeuten und $Y^1$ bis $Y^6$, $A^1$, $A^2$, $M^1$, $M^2$, n', m, Me, L und L' die bereits zuvor gegebene Bedeutung besitzen.

Zur Herstellung einer cholesterischen Flüssigkristallmischung bedient man sich meist eines flüssigkristallinen (nematischen) Basismaterials und eines oder mehrerer optisch aktiver Dotierstoffe. Hierdurch lassen sich die optischen Eigenschaften der Mischung durch einfache Veränderung des Verhältnisses von flüssigkristallinem Basismaterial zu Dotierstoff variieren.

Obwohl chirale Dotierstoffe für flüssigkristalline Phasen in großer Zahl aus der wissenschaftlichen und Patentliteratur bekannt sind, ist über die Verwendung von chiralen, ungeladenen Metallverbindungen als Dotierstoffe für flüssigkristalline Materialien verhältnismäßig wenig bekannt.

Das Phasenverhalten von chiralen Kupfer(II)-, Nickel(II)-, Oxovanadium(IV)- und Palladium(II)-Komplexen des 4-(4-Heptyloxybenzoyloxy)-N-(S)-2-methylbutylsalicylaldehyds, in welchen das Zentralion vierfach koordiniert ist, wird von W. Pyzuk und Yu. Galyametdinov in Liquid Crystals, 1993, Vol. 15, No. 2, S. 265 - 268 untersucht. Das Salicylaldehyd-Derivat fungiert dabei als zweizähniger Ligand, welcher über das Sauerstoffatom der deprotonierten Hydroxygruppe und das Stickstoffatom der Schiff'schen Base der Aldehydgruppe koordiniert.

Von J. Buey et al. werden in Chem. Commun., 1999, S. 441 - 442, das Phasenverhalten eines einkernigen und eines zweikernigen chiralen Palladium(II)-Komplexes sowie der Mischungen dieser Komplexe mit einem nematischen Wirtsmaterial beschrieben. Die Palladiumatome sind jeweils vierfach koordiniert; im einkernigen Komplex erfolgt die Koordination der beiden unterschiedlichen zweizähnigen Liganden über ein Kohlenstoff- und ein Stickstoff- bzw. ein Sauerstoff- und ein Stickstoffatom, im zweikernigen Komplex sind die Palladiumzentren durch eine Schwefel- und eine Carboxylbrücke miteinander verbunden, die übrigen Koordinationen an den Palladiumzentren werden jeweils über ein Kohlenstoff- und ein Stickstoffatom zweier gleicher Liganden ausgebildet.

G. Piao et al. beschreiben in Synthetic Metals, 101,1999, S. 92 - 93, die Polymerisation von Acetylen unter Einwirkung eines Katalysators aus chiraler Titanverbindung und Triethylaluminium. Eine der untersuchten Titanverbindungen ist ein Titan-Komplex, in welchem das Metallzentrum vierfach mit zwei axial-chiralen, zweizähnigen (R)- oder (S)-6,6'-Di(4-(trans-4-n-pentylcyclohexyl)phenoxy-1-hexyl)-2,2'-dihydroxy-1,1'-binaphthyl-Liganden über die Sauerstoffatome der deprotonierten Hydroxygruppen koordiniert ist. Das (R)- oder (S)-Titan-tetrakis(2-octanolat) werden als weitere Titanverbindung untersucht. Darüberhinaus ist auch die Herstellung chiral-nematischer Phasen durch Mischen der Titanverbindungen mit flüssigkristallinen Materialien erwähnt.

Untersuchungen von A. F. Drake et al. zur helicalen Verdrillungsstärke ("helical twisting power") von Trisacetylacetonat("Pentan-2,4-dionato")-Komplexen des dreiwertigen Kobalts, Chroms, Rutheniums, Iridiums und Rhodiums in flüssigkristallinen Materialien sind in Chem. Phys. Letters, Vol. 110 (6), 1984, S. 630 - 633, dargelegt. Die Zentralionen der Komplexe sind sechsfach über die Sauerstoffatome der jeweils drei zweizähnigen Acetylacetonat-Liganden koordiniert. Erst die Art der Koordination der achiralen Liganden an das Zentralatom verleiht den beschriebenen Metallacetylacetonaten Chiralität, was diese Verbindungen von den vorher erwähnten unterscheidet, in welchen die Liganden selbst bereits chiral sind.

Die Aufgabe der vorliegenden Erfindung bestand nun darin, weitere chirale Metallverbindungen bereitzustellen, welche als Dotierstoffe für flüssigkristalline Materialien geeignet sind.

Dementsprechend wurden die eingangs beschriebenen Verbindungen der Formeln IIIa und IIIb sowie die Verwendung der eingangs beschriebenen Verbindungen der Formeln Ia und Ib gefunden.

Erfindungsgemäß sollen hierbei chirale Metallverbindungen umfasst sein, deren Chiralität sowohl durch chirale Liganden L/L' als auch durch die räumliche Anordnung achiraler Liganden L/L' um das Zentrum Me bedingt ist.

Die nachfolgenden Ausführungen zur Bedeutung der Variablen $P^1$, $Y^1$ bis $Y^3$, $A^1$ und $M^1$ in der Verbindung Ia, der Variablen $P^1$, $P^2$, $Y^1$ bis $Y^6$, $A^1$, $A^2$, $M^1$ und $M^2$ in der Verbindung Ib und der Variablen $P^2$, $Y^4$ bis $Y^6$, $A^2$ und $M^2$ in der Verbindung IIIb sind selbstverständlich nur dann von Relevanz, wenn die Variablen n bzw. n und n' bzw. n' in den entsprechenden Formeln den Wert 1 annehmen.

Als Spacer $A^1$ bzw. $A^1$ und $A^2$ kommen in Verbindungen Ia, Ib, IIIa und IIIb alle dem Fachmann für diesen Zweck bekannten Gruppen in Betracht. In der Regel enthalten die Spacer ein bis 30, vorzugsweise ein bis 12, besonders bevorzugt ein bis sechs Kohlenstoffatome und bestehen aus vorwiegend linearen aliphatischen Gruppen. Sie

können in der Kette, z.B. durch nicht benachbarte Sauerstoffoder Schwefelatome oder Imino- oder Alkyliminogruppen wie beispielsweise Methyliminogruppen, unterbrochen sein. Für die Spacerkette kommen dabei als Substituenten noch Fluor, Chlor, Brom, Cyan, Methyl und Ethyl in Betracht.

Repräsentative Spacer sind beispielsweise:

$$-(CH_2)_u-,\ -(CH_2CH_2O)_vCH_2CH_2-,\ -CH_2CH_2SCH_2CH_2-,\ -CH_2CH_2NHCH_2CH_2-,$$

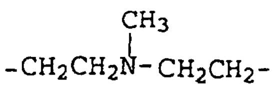 , 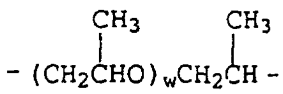 , 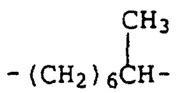 oder 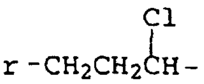 ,

wobei u für 1 bis 30, vorzugsweise 1 bis 12, v für 1 bis 14, vorzugsweise 1 bis 5, und w für 1 bis 9, vorzugsweise 1 bis 3, steht.

Bevorzugte Spacer sind Ethylen, Propylen, n-Butylen, n-Pentylen und n-Hexylen.

Als mesogene Gruppen $M^1$ bzw. $M^1$ und $M^2$ in den Verbindungen Ia, Ib, IIIa und IIIb können alle dem Fachmann als solche geeignete Gruppen dienen.

Insbesondere kommen mesogene Gruppen des allgemeinen Aufbaus IV

$$(-T-Y^7)_r-T- \qquad (IV)$$

in Betracht, worin die Variablen bedeuten

T zweiwertige gesättigte oder ungesättigte carbo- oder heterocyclische Reste

$Y^7$ -chemische Einfachbindung, -O-, -S-, -CO-, -CO-O-, -O-CO-, -CO-N(R)-,-(R)N-CO-,-O-CO-O-, -O-CO-N(R)-, -(R)N-CO-O- oder -(R)N-CO-N(R)- und

r Werte von 0, 1, 2 oder 3, wobei für r > 0 sowohl die Reste T als auch die Gruppen $Y^7$ untereinander gleich oder verschieden sein können.

Die Reste T können durch Fluor, Chlor, Brom, Cyan, Hydroxy, Formyl, Nitro, $C_1$-$C_{20}$-Alkyl, $C_1$-$C_{20}$-Alkoxy, $C_1$-$C_{20}$-Alkoxycarbonyl, $C_1$-$C_{20}$-Monoalkylaminocarbonyl, $C_1$-$C_{20}$-Alkylcarbonyl, $C_1$-$C_{20}$-Alkylcarbonyloxy oder $C_1$-$C_{20}$-Alkylcarbonylamino substituierte Ringsysteme sein. Bevorzugte Reste T sind:

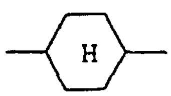 , 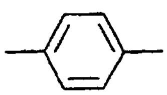 , 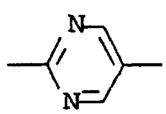 , 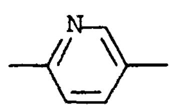 , 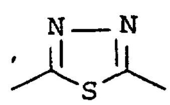 ,

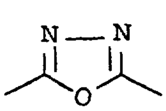 , 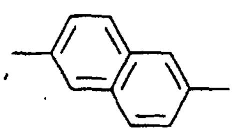 , 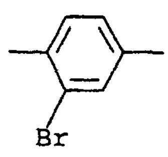 , 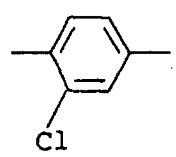 , 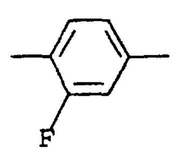 ,

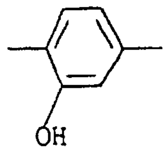 , 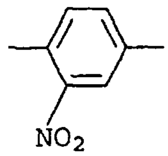 , 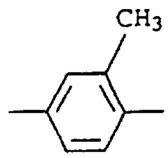 , 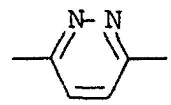

und

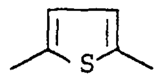 .

Als mesogene Gruppen $M^1$ bzw. $M^1$ und $M^2$ kommen in Frage beispielsweise:

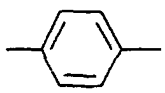 , 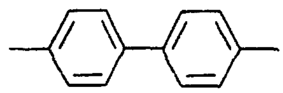 , 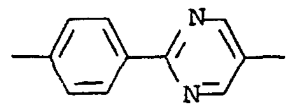 ,

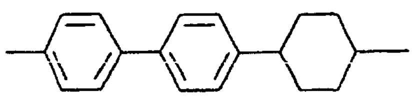 , 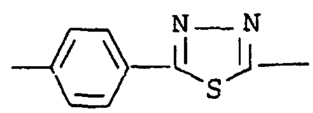 ,

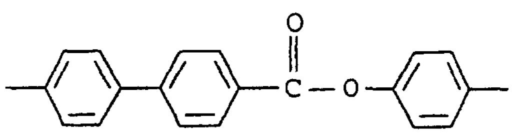 , 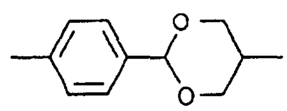 ,

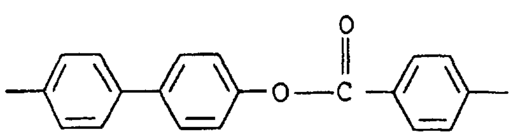 , 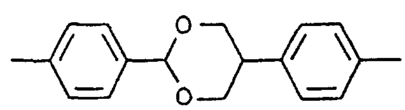 ,

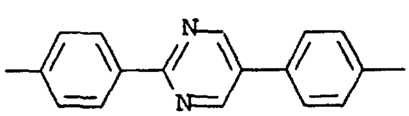 , 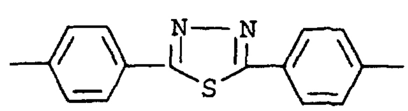 ,

oder

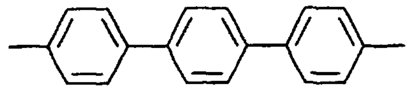 .

Weitere mögliche mesogene Gruppen $M^1$ bzw. $M^1$ und $M^2$ gehorchen den folgenden Formeln:

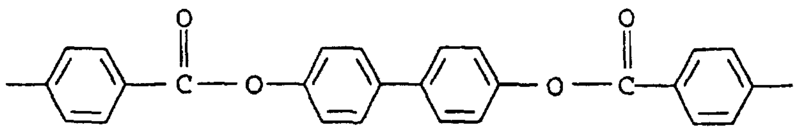 ,

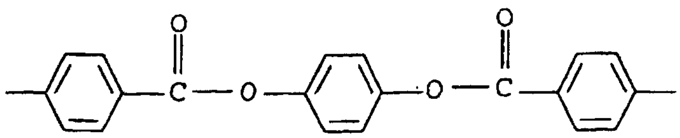 , 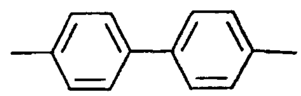 ,

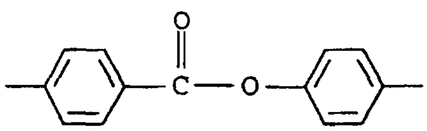 oder 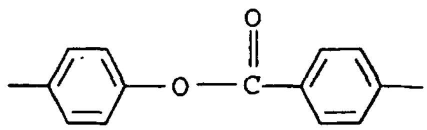 ,

Die zuvor gezeigten (unsubstituierten) mesogenen Gruppen können natürlich entsprechend der oben gegebenen Beispiele für mögliche Reste T noch durch Fluor, Chlor, Brom, Cyan, Hydroxy, Formyl, Nitro, $C_1$-$C_{20}$-Alkyl, $C_1$-$C_{20}$-Alkoxy, $C_1$-$C_{20}$-Alkoxycarbonyl, $C_1$-$C_{20}$-Monoalkylaminocarbonyl, $C_1$-$C_{20}$-Alkylcarbonyl, $C_1$-$C_{20}$-Alkylcarbonyloxy oder $C_1$-$C_{20}$-Alkylcarbonylamino substituiert sein. Bevorzugte Substituenten sind vor allem kurzkettige aliphatische Reste wie Methyl, Ethyl, n-Propyl, i-Propyl, n-Butyl, i-Butyl, sek.-Butyl, tert.-Butyl sowie Alkoxy-, Alkoxycarbonyl-, Alkylcarbonyl-, Alkylcarbonyloxy-, Alkylcarbonylamino- und Monoalkylaminocarbonylreste, die diese Alkylgruppen enthalten.

Als $C_1$-$C_{12}$-Alkyl für $P^1$ bzw. $P^1$ und $P^2$ in den Verbindungen Ia und Ib sind verzweigte oder unverzweigte $C_1$-$C_{12}$-Alkylketten zu nennen, beispielsweise Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, 2-Ethylhexyl, n-Nonyl, n-Decyl, n-Undecyl und n-Dodecyl.

Bevorzugtes Alkyl für $P^1$ bzw. $P^1$ und $P^2$ sind die verzweigten oder unverzweigten $C_1$-$C_6$-Alkylketten, wie etwa Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl.

Als polymerisierbare oder zur Polymerisation geeignete Gruppe oder als Rest, welcher eine polymerisierbare oder zur Polymerisation geeignete Gruppe trägt (nachfolgend werden solche Gruppen oder Reste auch einfach als "reaktive Reste" bezeichnet), kommen für $P^1$ bzw. $P^1$ und $P^2$ sowie $P^{1'}$ und $P^{2'}$ in Frage:

$CH_2=CH-$ , $CH\equiv C-$ , 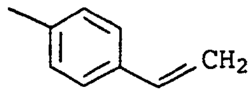 , 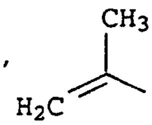 , 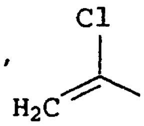 ,

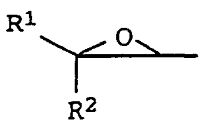 , 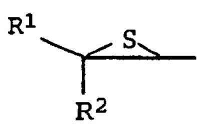 , 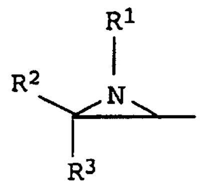 , 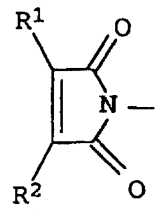

- $N=C=O$, $-N=C=S$, $-O-C\equiv N$, $-COOH$, $-OH$ oder $NH_2$

wobei die Reste $R^1$ bis $R^3$ gleich oder verschieden sein können und Wasserstoff oder $C_1$-$C_4$-Alkyl, wie Methyl, Ethyl, n-Propyl, iso-Propyl, n-Butyl, iso-Butyl, sec.-Butyl oder tert.-Butyl bedeuten.

Von den polymerisierbaren Gruppen können die Cyanate spontan zu Cyanuraten trimerisieren. Die anderen genannten Gruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Carboxylgruppen können zu Polyestern und Polyamiden kondensiert werden. Die Maleinimidogruppe eignet sich besonders zur radikalischen Copolymerisation mit olefinischen Verbindungen, wie beispielsweise Styrol oder Verbindungen, welche Styrolstrukturelemente enthalten.

Die komplementären reaktiven Reste können dabei, zusammen mit den ihnen entsprechenden reaktiven Resten, in ein und derselben Verbindung Ia, Ib, IIIa oder IIIb zugegen sein (so dass diese Verbindung potenziell auch mit sich selbst polymerisieren kann) oder in einer weiteren Verbindung Ia, Ib, IIIa oder IIIb. Diese komplementären reaktive Reste können sich aber auch, zusammen mit den entsprechenden reaktiven Resten, in ein und derselben (Hilfs-)Verbindungen oder in weiteren solchen (Hilfs-)Verbindungen befinden.

Als polymerisierbare Gruppe ist insbesondere der Acrylat-, Methacrylat- sowie der Vinylrest hervorzuheben.

Me steht für ein Übergangsmetall der vierten, fünften oder sech sten Periode, wobei Technetium, Silber, Cadmium, Gold, Quecksil ber und die Lanthanoide ausgenommen sind, oder Me bezeichnt ein Hauptgruppenelement der Gruppe 14 (nach IUPAC), wobei hier Kohlenstoff und Blei ausgenommen sind. Insbesondere steht Me für Ti - tan, Chrom, Mangan, Eisen, Kobalt, Kupfer, Zirkonium, Molybdän, Ruthenium, Rhodium und Wolfram oder Silicium.

Der dreizähnige Ligand L entspricht der allgemeinen Formel II

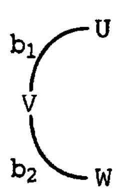 (II),

worin U, V, W stickstoff-, sauerstoff-, phosphor- oder schwefelhaltige Gruppierungen bedeuten, welche über ein Stickstoff-, Sauerstoff-, Phosphor- bzw. Schwefelatom mit mindestens einem freien Elektronenpaar verfügen, über welches die Koordination an das Zentralion Me erfolgt.

Bevorzugt enthalten die Verbindungen der Formeln Ia, Ib, IIIa und IIIb Liganden L, in welchen V in Formel II für eine stickstoffhaltige Gruppierung steht.

Besonders bevorzugt sind in den Verbindungen der Formeln Ia, Ib, IIIa und IIIb Liganden L zugegen, in welchen V in Formel II für eine stickstoffhaltige Gruppierung steht und U und W entweder beide für eine sauerstoff- oder phosphorhaltige Gruppierung stehen oder eine der Gruppierungen U und W für eine sauerstoff- und die andere für eine schwefelhaltige Gruppierung steht, d.h. Formel II zerfällt für diesen besonders bevorzugten Fall in die Formeln:

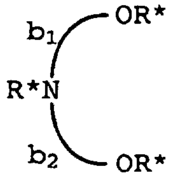 , 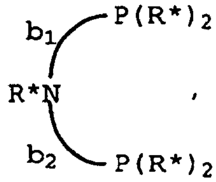 , 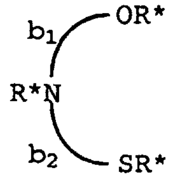 oder 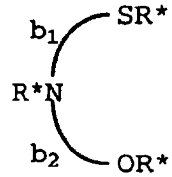 ,

wobei R*N, OR*, SR* und $P(R^*)_2$ allgemein für stickstoff-, sauerstoff-, schwefel- oder phosphorhaltige Gruppierungen stehen. Angemerkt sei hier, dass R* auch eine zweite Bindung innerhalb der Brücke $b_1$ bzw. $b_2$ bedeuten kann, so dass beispielsweise R*N auch einer Iminogruppe -N= entsprechen kann.

Gemäß der Bedingung, dass es sich um ungeladene Metallverbindungen Ia, Ib, IIIa und IIIb handeln soll, müssen die stickstoff-, sauerstoff-, schwefel- oder phosphorhaltige Gruppierungen entsprechende Formalladungen tragen oder es müssen sich aus den entsprechenden Gruppierungen solche mit der benötigten Formalladung herstellen lassen, so dass, gegebenenfalls unter Berücksichtigung von Resten L', eine Neutralisierung der Ladungen am Zentralion Me resultiert.

$b_1$ und $b_2$ in Formel II entsprechen Alkylen- oder Alkenylenbrücken mit zwei oder drei Kohlenstoffatomen, welche an das Stickstoff-, Sauerstoff-, Phosphor- bzw. Schwefelatom der Gruppierungen U und V (für $b_1$) bzw. der Gruppierungen V und W (für $b_2$) gebunden sind und welche im Falle einer $C_2$-Alkenylenbrücke mit bis zu zwei, in den übrigen Fällen mit bis zu vier organischen Resten mit bis zu 12 Kohlenstoffatomen substituiert sein können, und in welchen zwei benachbarte Kohlenstoffatome der Alkylen- oder Alkenylenbrücke Bestandteil eines unsubstituierten oder substituierten, gegebenenfalls benzanellierten Benzolringes sein können.

Als solche möglichen organischen Reste mit bis zu 12 Kohlenstoffatomen aber auch als Bedeutung von L' sind beispielsweise verzweigte und unverzweigte Alkylreste, wie Methyl, Ethyl, n-Propyl, iso-Propyl, n-Butyl, sec.-Butyl, iso-Butyl, tert.-Butyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl- 2-methylpropyl, n-Heptyl, n-Octyl, 2-Ethylhexyl, n-Nonyl, n-Decyl, n-Undecyl und n-Dodecyl aber auch Cycloalkylreste mit verzweigten oder unverzweigten Alkylketten, wie z.B. Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Butylcyclopropyl, 1,2-Dimethylcyclypropyl, 1-Methyl-2-Ethylcyclopropyl, Cyclooctyl, Cyclononyl oder Cyclodecyl zu nennen.

Weiter sind unter solchen organischen Resten mit bis zu 12 Kohlenstoffatomen aber auch als Bedeutung von L' beispielsweise auch verzweigte und unverzweigte Alkenylreste, wie Vinyl, Propenyl, Isopropenyl, 1-Butenyl, 2-Butenyl, 1-Pentenyl, 2-Pentenyl, 2-Methyl-1-butenyl, 2-Methyl-2-butenyl, 3-Methyl-1-butenyl, 1-Hexenyl, 2-Hexenyl, 1-Heptenyl, 2-Heptenyl, 1-Octenyl, 2-Octenyl, 1-Nonenyl, 2-Nonenyl, 1-Decenyl, 2-Decenyl, 1-Undecenyl, 2-Undecenyl, 1-Dodecenyl und 2-Dodecenyl aber auch Cycloalkenylreste mit verzweigten oder unverzweigten Ketten mit einer oder mehreren Doppelbindungen, wie z.B. Cyclopropenyl, Cyclobutenyl, Cyclopentenyl, Cyclopentadienyl, Cyclohexenyl, 1,3- Cyclohexadienyl, 1,4-Cyclohexadienyl, Cycloheptenyl, Cycloheptatrienyl, Cyclooctenyl, 1,5-Cyclooctadienyl, Cyclooctatetraenyl, Cyclononenyl oder Cyclodecenyl zu verstehen.

Bevorzugt handelt es sich bei solchen organischen Reste mit bis zu 12 Kohlenstoffatomen um gegebenenfalls mit Alkylresten substituierte $C_6$-$C_{12}$-Aryle oder $C_7$-$C_{12}$-Arylalkyle. Zu ersteren Resten gehören insbesondere unsubstituiertes oder mit Methyl, Ethyl, n-Propyl, iso-Propyl, n-Butyl, sec.-Butyl, iso-Butyl oder tert.-Butyl substituiertes Phenyl oder unsubstituiertes oder gegebenenfalls mit Methyl substituiertes Naphthyl, zu letzteren Resten insbesondere am Benzolkern unsubstituiertes oder mit Methyl, Ethyl, n-Propyl, iso-Propyl, n-Butyl, sec.-Butyl, iso-Butyl oder tert. -Butyl substituiertes Phenylmethyl, 2-Phenylethyl, 3-Phenylpropyl oder 4-Phenylbutyl.

L' hat demgegenüber bevorzugt die Bedeutung von Methyl, tert.-Butyl und unsubstituiertem oder mit Methyl, Ethyl, n-Propyl, iso-Propyl, n-Butyl, sec.-Butyl, iso-Butyl oder tert.-Butyl substituiertem Phenyl.

Mögliche dreizähnige chirale Liganden L, welche nicht über Gruppierungen $P^1$-$Y^1$-$A^1$-$Y^2$-$M^1$-$Y^3$- verfügen, d. h. für welche n einen Wert von 0 annimmt, gehorchen der Formel

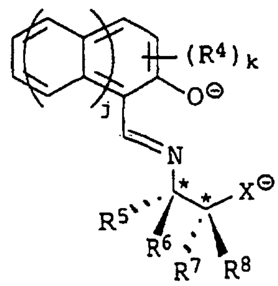

worin die Variablen bedeuten:

j gleich 0, 1 oder 2,

k gleich 0, 1, 2 oder 3,

X gleich Sauerstoff oder Schwefel,

$R^4$ gleich Methyl, Ethyl, n-Propyl, iso-Propyl, n-Butyl, sec.-Butyl, iso-Butyl oder tert.-Butyl, Halogen, wie z.B. Chlor oder Brom, Nitro, Cyano, Carboxyl oder Sulfonyl, wobei für den Fall, dass k gleich 2 ist, die beiden Reste $R^4$ gleich oder verschieden sein können,

$R^5$ bis $R^8$ gleich Wasserstoff, $C_6$-$C_{12}$-Aryl, wie z.B. Phenyl, mit Methyl, Ethyl, n-Propyl, iso-Propyl, n-Butyl, sec. -Butyl, iso-Butyl oder tert.-Butyl substituiertes Phenyl, Naphthyl oder mit Methyl substituiertes Naphthyl, $C_7$-$C_{12}$-Arylalkyl, wie z.B. Phenylmethyl, 2-Phenylethyl, 3-Phenylpropyl oder 4-Phenylbutyl oder mit Methyl, Ethyl, n-Propyl, iso-Propyl, n-Butyl, sec.-Butyl, iso-Butyl oder tert.-Butyl substituiertes Phenylmethyl, 2-Phenylethyl, 3-Phenylpropyl oder 4-Phenylbutyl, mit der Maßgabe, dass in mindestens einem der Restepaare $R^5$ und $R^6$ bzw. $R^7$ und $R^8$ die Reste $R^5$/$R^6$ bzw. $R^7$/$R^8$ verschieden voneinander sind und dementsprechend mindestens eines der markierten Kohlenstoffatome (*) ein asymmetrisches Zentrum ist.

Beispiele für solche Liganden L sind (Ph bezeichnet den Phenylrest)

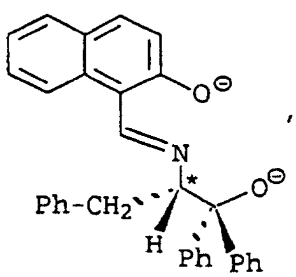 , 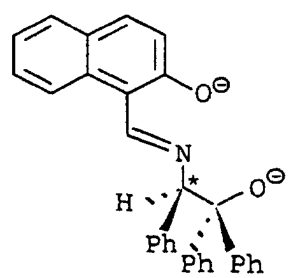 , 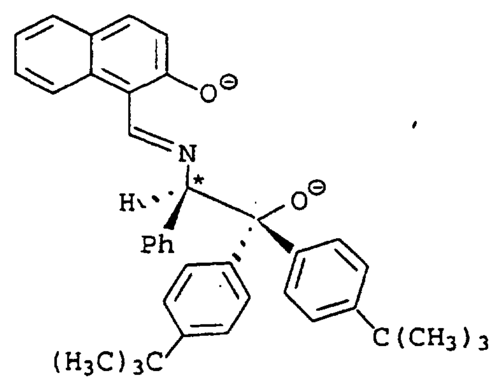 ,

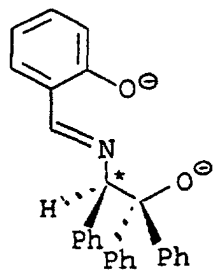 , 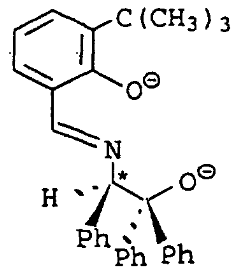 , 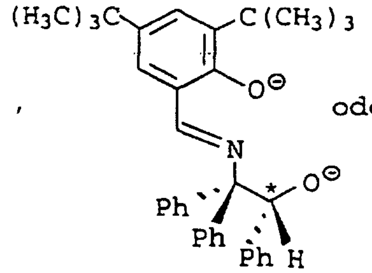 oder 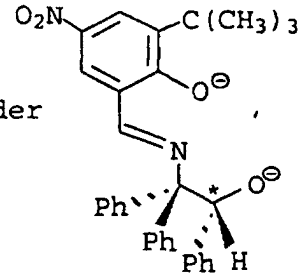 ,

sowie die entsprechenden enantiomeren Verbindungen.

Erfindungsgemäße Verwendung finden im Falle der Verbindungen der Formel Ib und der bereits erwähnten bevorzugten Ausführungsformen bevorzugt solche, in welchen n' für alle m Gruppierungen $L'(-Y^6-M^2-Y^5-A^2-Y^4-P^2)_{n'}$ den Wert von 0 annimmt. Somit finden bevorzugt Verwendung Verbindungen der Formel

$$[(P^1-Y^1-A^1-Y^2-M^1-Y^3-)_nL]Me(L')_m$$

Analoges gilt auch für die Verbindungen der Formel IIIb sowie deren bereits erwähnte bevorzugte Ausführungsformen. Bevorzugt sind hier dementsprechend Verbindungen der Formel

$$[(P^{1'}-Y^1-A^1-Y^2-M^1-Y^3-)L]Me(L')_m.$$

Erfindungsgemäß finden die Verbindungen der Formeln Ia und Ib sowie IIIa und IIIb und deren bevorzugte Ausführungsformen Verwendung als chirale Dotierstoffe für flüssigkristalline Materialien. Der Begriff "flüssigkristalline Materialien" sei hierbei nicht nur auf Materialien beschränkt, in welchen ein oder mehrere Bestandteile bereits per se (im interessierenden Temperaturbereich) flüssigkristalline Eigenschaften besitzen und sich diese dann auch in den Materialien vorhanden sind, vielmehr sind hierunter auch solche Materialien zu verstehen, in welchen sich erst durch Mischen der Komponenten oder auch erst durch Zumischen der chiralen Verbindunge(en) Ia, Ib, IIIa und IIIb flüssigkristallines Verhalten manifestiert (z.B. lyotrope Systeme). Anzumerken sei hier ferner, dass die Verbindungen Ia, Ib, IIIa und IIIb nicht bereits selbst flüssigkristallines Verhalten aufweisen müssen.

Beansprucht werden weiter flüssigkristalline Materialien, welche mindestens eine erfindungsgemäß zu verwendende Verbindung der Formel Ia oder Ib oder mindestens eine Verbindung IIIa oder IIIb enthalten (im Folgenden auch "dotierte LC-Materialien" oder "(erfindungsgemäße) LC-Materialien" genannt).

Je nach den speziellen Erfordernissen können diese erfindungsgemäßen LC-Materialien in den Verbindungen Ia, Ib, IIIa oder IIIb und/oder dem flüssigkristallinen Basismaterial keine, wenige oder viele polymerisierbare oder zur Polymerisation geeignete Gruppen oder Reste, welche polymerisierbare oder zur Polymerisation geeignete Gruppen tragen, enthalten. Entsprechend der Anzahl solcher reaktiven Reste in den Bestandteilen der erfindungsgemäße LC-Materialien, lässt sich der gewünschte Polymerisations-, Vernetzungs- und/oder Kondensationsgrad nach erfolgter Polymerisation oder Kondensation einstellen.

Die Herstellung polymerisierbarer erfindungsgemäßer LC-Materialien lässt sich in der Regel durch Vermischen polymerisierbarer, flüssigkristalliner Materialien mit einer oder mehrerer der Verbindungen Ia, Ib, IIIa und/oder IIIb in einfacher Weise bewerkstelligen. Geeignete polymerisierbare, flüssigkristalline Verbindungen sind beispielsweise in den WO-Schriften 95/22586, 95/24454, 95/24455, 96/04351, 96/24647, 97/00600, 97/34862 und 98/47979 sowie der deutschen Offenlegungsschrift 198 35 730 beschrieben und entsprechen im Wesentlichen dem schematischen Aufbau P-Y-A-Y-M-Y-A-Y-P, worin die Variablen P, Y, A und M analoge Bedeutungen wie die Variablen $P^1/P^2$, $Y^1$ bis $Y^6$, $A^1/A^2$ und $m^1/m^2$ in den Formeln Ia, Ib, IIIa und IIIb besitzen.

Diese erfindungsgemäßen LC-Materialien können zur Herstellung optischer Bauelemente, wie z.B. LCDs, Polarisatoren oder Filtern dienen.

Weiter können diese erfindungsgemäßen LC-Materialien zum Bedrukken oder Beschichten von Substraten verwendet werden. Hierbei können noch weitere Zusätze enthalten sein. Als solche kommen in Frage Zusätze ausgewählt aus der Gruppe bestehend aus Photoinitiatoren, Reaktivverdünnern und Verdünnungsmitteln, Zusätze ausgewählt aus der Gruppe bestehend aus Entschäumern und Entlüftern, Gleit- und Verlaufshilfsmitteln, thermisch härtenden oder strahlenhärtenden Hilfsmitteln, Substratnetzhilfsmitteln, Netz- und Dispergierhilfsmitteln, Hydrophobierungsmitteln, Haftvermittlern und Hilfsmitteln zur Verbesserung der Kratzfestigkeit, Zusätze ausgewählt aus der Gruppe bestehend aus Farbstoffen und Pigmenten und Zusätze ausgewählt aus der Gruppe der Licht-, Hitze- und/oder Oxidationsstabilisatoren.

Die chemisch-physikalische Natur dieser Zusätze wird ausführlich in der deutschen Offenlegungsschrift 199 05 394 gewürdigt. Weiter sind in dieser Schrift flüssigkristalline Stoffgemenge beschrieben, als welche auch die erfindungsgemäßen LC-Materialien, gegebenenfalls in Mischung mit den zuvor erwähnten Zusätzen, anzusprechen sind. Die in vorliegender Anmeldung beanspruchten dotierten LC-Materialien können, gegebenenfalls in Mischung mit besagten Zusätzen, dementsprechend wie in der deutschen Schrift 199 05 394 ausgeführt, als Bedruckungs- und Beschichtungsmittel für Substrate eingesetzt werden.

Als Bedruckungs- oder Beschichtungssubstrate kommen neben Papierund Kartonageprodukten, beispielsweise für Tragetaschen, Zeitschriften, Broschüren, Geschenkverpackungen und Verpackungsmaterialien für Gebrauchs-, Genuss- und Luxusgüter, auch Folien, etwa für dekorative und nicht-dekorative Verpackungszwecke, sowie Textilien jedweder Art und Leder in Frage.

Weitere Substrate sind aber auch Güter der (Unterhaltungs-)Elektronik, wie etwa MC-, MD-, DVD- und Videorecorder, Fernseher, Radios, Telefone/Handys usw. und EDV-Geräte, Güter aus dem Freizeit-, Sport-, Haushalts- und Spielsektor, wie etwa Fahrräder, Kinderfahrzeuge, Skier, Snow- und Surfboards, Inline-Skater und Roll- und Schlittschuhe sowie Haushaltsgeräte. Darüber hinaus sind unter solchen Substraten beispielsweise auch Schreibutensilien und Brillengestelle zu verstehen.

Weitere Substrate sind aber auch im Bausektor anzutreffende Oberflächen, wie Gebäudewände oder auch Fensterscheiben. In letzterem Fall kann neben einem dekorativen auch ein funktioneller Effekt gewünscht sein. So ist es möglich, Mehrfachschichten auf dem Fenstermaterial zu erzeugen, deren einzelne Schichten verschiedene chemisch-physikalische Eigenschaften besitzen. Werden etwa einzelne Schichten der dotierten LC-Materialien entgegengesetzter Verdrillung (durch Verwendung des einen Enantiomeren sowie seines optischen Antipoden als Dotierstoff gemäß vorliegender Erfindung) oder einzelne Schichten von vernetzten dotierten LC-Materialien gleicher Gangrichtung aber jeweils unterschiedlicher Ganghöhe und somit unterschiedlicher Reflektionseigenschaften (durch Verwendung unterschiedlicher Konzentrationen an Dotierstoff gemäß vorliegender Erfindung) aufgebracht, so können gezielt bestimmte Wellenlängen oder Wellenlängenbereiche des Lichtspektrums reflektiert werden. Zu diesem Aspekt der erfindungsgemäßen LC-Materialien, speziell Wärmeisolationsbeschichtungen, sei auch auf die deutsche Offenlegungsschrift 197 45 647 verwiesen.

Die erfindungsgemäßen LC-Materialien können auch zur Herstellung von Dispersionen und Emulsionen verwendet werden, welche bevorzugt auf Wasser basieren. Hierzu sei auf die Schriften WO 96/02597 und WO 98/47979 verwiesen, in welchen die Zubereitung von Dispersionen und Emulsionen unter Verwendung von flüssigkristallinen Materialien beschrieben ist.

Weiter lassen sich aus den erfindungsgemäßen LC-Materialien Filme herstellen. Hierunter sind insbesondere selbsttragende Schichten zu verstehen, wie sie durch Polymerisation der entsprechend beschaffenen dotierten LC-Materialien erhalten werden. Diese Filme können sich auf Substraten bzw. Unterlagen befinden, welche so geartet sind, dass deren leichte Ablösung und Übertragung auf andere Substrate oder Unterlagen zum permanenten Verbleib durch geeignete Maßnahmen möglich ist. Solche Filme sind beispielsweise im Bereich der Folienbeschichtung und in Kaschierverfahren verwendbar.

Auch sind die erfindungsgemäßen LC-Materialien zur Herstellung von Pigmenten geeignet. Hierbei bedient man sich insbesonere solcher Materialien, welche in hohem Maße reaktive Reste enthalten und somit hochvernetzte Polymerisate bilden. Die Herstellung solcher Pigmente ist bekannt und beispielsweise ausführlich in der Schrift WO 99/11733 beschrieben. Darüber hinaus lassen sich aber auch in Form und Größe voreingestellte Pigmente unter Verwendung von Drucktechniken oder mit Hilfe von Netzen, in deren Zwischenräumen sich die erfindungsgemäßen LC-Materialien befinden, herstellen. Der nachfolgenden Polymerisation oder Kondensation der Materialien schließt sich hierbei das Ab- bzw. Herauslösen vom Substrat bzw. aus dem Netz an. Diese Vorgehensweisen sind in den Schriften WO 96/02597, WO 97/27251, WO 97/27252 und EP 0 931 110 ausführlich beschrieben.

Die polymerisierbaren LC-Materialien werden mit Hilfe ihrer reaktiven Reste und abhängig von deren chemischer Natur durch Kondensation oder radikalische oder ionische Polymerisationsverfahren, welche durch photochemische Reaktionen gestartet werden können, in Polymere mit eingefrorener flüssigkristalliner Ordnungsstruktur überführt.

Diese Pigmente können einschichtig (homogen) sein oder einen Mehrschichtaufbau aufweisen. Letztere Pigmente sind jedoch üblicherweise nur herstellbar, wenn Beschichtungsverfahren zur Anwendung kommen, in welchen sukzessive mehrere Schichten übereinander erzeugt und abschließend einer mechanischen Zerkleinerung unterworfen werden.

Verwendung finden diese Pigmente vor allem in der Kosmetik, beispielsweise für die Herstellung von Lidschatten, und in Anstrichmitteln für den Automobil- und Freizeitbereich.

Beispiele

A) Herstellung der chiralen Metallverbindungen

Die Herstellung der chiralen Metallverbindungen erfolgte gemäß den nachfolgend aufgeführten Gleichungen 1 bis 4 und den hierzu entsprechenden Stufen 1 bis 4

Gleichung 1:

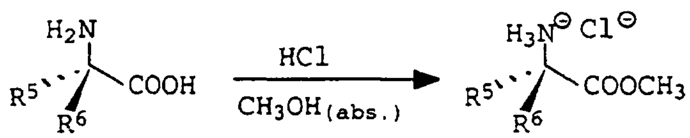


Stufe 1: Herstellung von (2R)-2-Amino-2-phenylessigsäuremethylester-Hydrochlorid (entsprechend Gleichung 1 mit $R^5$ gleich Wasserstoff, $R^6$ gleich Phenyl; Verbindung 1a)

In einen mit Rührer, Rückflußkühler und Gaseinleitungsrohr mit Fritte versehenen 1-1-Dreihalskolben wurden 50,2 g (332 mmol) (2R)-2-Amino-2-phenylessigsäure (Fa. Fluka) vorgelegt und mit Hilfe eines Dreiwegehahns und zweier Waschflaschen spülte man 20 Minuten kräftig mit Stickstoff. Dann suspendierte man das Edukt im Stickstoffgegenstrom in 250 ml absolutem Methanol. Nach Abkühlung auf 0°C wurde über den Dreiwegehahn von Stickstoff auf Chlorwasserstoffgas umgeschaltet und letzteres bis zur Sättigung eingeleitet. Man ließ den Ansatz innerhalb von einer Stunde auf Raumtemperatur erwärmen. Aus der ursprünglichen Suspension entstand eine klare Lösung, welche man im Folgenden noch drei Stunden unter Rückfluss erhitzte.

Zum Abdampfen des Methanols wurde die Lösung über Nacht offen in einer Kristallisationsschale stehen gelassen, der erhaltene Feststoff mit Diethylether gewaschen und in Methanol/Diethylether (1:1) umkristallisiert. Nach Trocknung bei 50°C im Hochvakuum erhielt man das gewünschte Produkt in einer Ausbeute von 58,0 g (87 %).

In Tabelle 1 sind, neben Verbindung 1a, die analog hergestellten Verbindungen 1b und 1c aufgeführt.

Tabelle 1

| Edukt | Produkt | Produktbezeichnung |
|---|---|---|
| (R)-2-Amino-2-phenylessigsäure (Fa. Aldrich) | (R)-2-Amino-2-phenylessigsäuremethylester-Hydrochlorid | Verbindung 1a |
| (S)-2-Amino-2-phenylessigsäure (Fa. Aldrich) | (S)-2-Amino-2-phenylessigsäuremethylester-Hydrochlorid | Verbindung 1b |
| (S)-2-Amino-2-benzylessigsäure (Fa. Aldrich) | (S)-2-Amino-2-benzylessigsäuremethylester-Hydrochlorid | Verbindung 1c |

Gleichung 2:

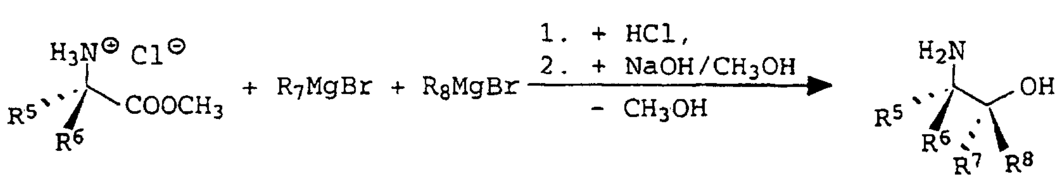

Stufe 2: Herstellung von (2R)-2-Amino-1,1,2-triphenylethanol (entsprechend $R^5$ gleich Wasserstoff, $R^6$ bis $R^8$ gleich Phenyl in der allgemeinen Formel des Ethanolamins in Gleichung 2; Verbindung 2a)

In einen mit KPG-Rührer, Intensivkühler, Stickstoff-/Vakuumanschluss, Stopfen und 1-1-Tropftrichter (mit Druckausgleich) versehenen 4-l-Vierhalskolben wurden 57,6 g (2,37 mol) Magnesiumspäne vorgelegt, welche man mittels einiger Iodkristalle anätzte (aktivierte). Dann suspendierte man die Späne in 100 ml absolutem Diethylether, gab zum Starten der Grignard-Reaktion 10,6 g (0,068 mol) frisch destilliertes Brombenzol (Fa. Aldrich) unverdünnt hinzu und erhitzte die Mischung lokal mit einem Heißluftföhn. Nach Beginn der Reaktion wurden weitere 370,6 g (2,36 mol) frisch destilliertes Brombenzol in 500 ml Diethylether innerhalb von drei Stunden tropfenweise so zugegeben, dass die Lösung gelinde siedete. Nach beendeter Zugabe wurde noch drei Stunden bei Raumtemperatur weitergerührt.

Die Lösung wurde auf 0°C abgekühlt und das feste Hydrochlorid (237 g, 1,18 mol) so zugegeben, dass die Innentemperatur nicht über 5°C stieg. Nach beendeter Zugabe wurde die gesamte Lösung bei Raumtemperatur über die Dauer von sieben Stunden gerührt.

Zur Hydrolyse wurde die Lösung langsam auf 2,0 kg Eis gegossen, danach vorsichtig mit 500 ml halbkonzentrierter Salzsäure versetzt und eine Stunde kräftig gerührt. Das erhaltene Hydrochlorid des gewünschten Produktes wurde mittels einer Porzellan-Nutsche abgesaugt, mit Diethylether gewaschen, in einer 2 n Lösung von Natriumhydroxid in Methanol gelöst und im Vakuum konzentriert.

Man verdünnte den Rückstand mit 2 l Dichlormethan und 1 l Wasser und extrahierte -nach der Phasentrennung- die organische Phase dreimal mit je 500 ml Wasser. Die vereinigten organischen Phasen wurden über wasserfreiem Magnesiumsulfat getrocknet, filtriert und am Rotationsverdampfer eingeengt. Nach Umkristallisation des erhaltenen Feststoffs aus 75 ml Toluol erhielt man das gewünschte Reinprodukt in einer Ausbeute von 54,9 g (66%) als weißes Pulver, welches bei -18°C gelagert werden sollte.

In Tabelle 2 sind, neben Verbindung 2a, die analog hergestellten Verbindungen 2b bis 2d aufgeführt.

Tabelle 2

| Edukte | Produkt | Produktbezeichnung |
|---|---|---|
| Verbindung 1a/ Brombenzol (Fa. Aldrich) | (2R)-2-Amino-1,1,2 triphenylethanol | Verbindung 2a |
| Verbindung 1b/ Brombenzol (Fa. Aldrich) | (2S)-2-Amino-1,1,2 triphenylethanol | Verbindung 2b |
| Verbindung 1a/ 4-Tert.-butylbrombenzol(Fa. Aldrich) | (2R)-2-Amino-1,1-bis (4-tert.-butylphenyl)-2-phenylethanol | Verbindung 2c |
| Verbindung 1c/ Brombenzol (Fa. Aldrich) | (2S)-2-Amino-2-benzyl-1,1-diphenylethanol | Verbindung 2d |

Herstellung von (1R)-2-Amino-1,2,2-Triphenylethanol (Verbindung 2g) gemäß den Gleichungen 2(i) bis 2(iv)

Gleichung 2(i):

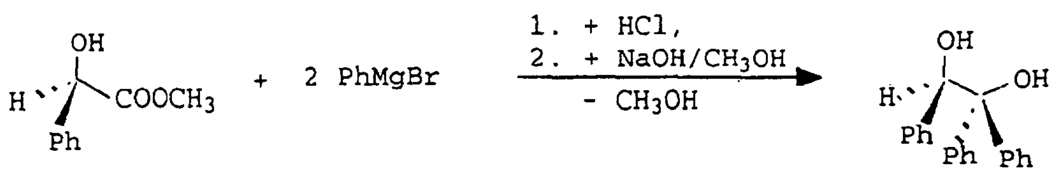


Stufe 2(i): Herstellung von (2R)-1,1,2-Triphenyl-1,2-ethandiol

In einem mit KPG-Rührer, Intensivkühler, Stickstoff-/Vakuumanschluss, Stopfen und 1-1-Tropftrichter (mit Druckausgleich) versehenen 2-l-Vierhalskolben wurden 40 g (1,65 mol) Magnesiumspäne vorgelegt, welche man mittels einiger Iodkristalle anätzte (aktivierte). Dann suspendierte man die Späne in 100 ml absolutem Diethylether, gab zum Starten der Grignard-Reaktion 5 ml (0,045 mol) frisch destilliertes Brombenzol (Fa. Aldrich) unverdünnt hinzu und erhitzte die Mischung lokal mit einem Heißluftföhn. Nach Beginn der Reaktion wurden weitere 185 ml (1,67 mol) frisch destilliertes Brombenzol in 325 ml Diethylether innerhalb von drei Stunden tropfenweise so zugegeben, dass die Lösung gelinde siedete. Nach beendeter Zugabe wurde noch eine Stunde bei Raumtemperatur weitergerührt.

Die Lösung wurde auf 0°C abgekühlt und (R)-Mandelsäuremethylester (49,9 g; 0,3 mol) in 300 ml absolutem Diethylether so zugegeben, dass die Innentemperatur nicht über 5°C stieg. Nach beendeter Zugabe wurde die gesamte Lösung bei Rückfluss über die Dauer von vier Stunden gerührt.

Zur Hydrolyse wurde die Lösung langsam auf 500g Eis gegossen, danach vorsichtig mit 0,5%iger Salzsäure bis zu einem pH-Wert von 6 versetzt. Die organische Phase wurde abgetrennt und die wässrige Phase dreimal mit Methylenchlorid (125 ml) extrahiert. Nach Trocknung über Magnesiumsulfat wurden die organischen Phasen eingedampft und das Rohprodukt aus Methanol umkristallisiert. Die Ausbeute betrug 57 g (65%).

Gleichung 2(ii):

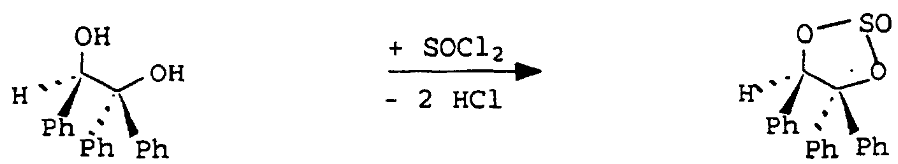


Stufe 2(ii): Herstellung (5R)-4,4,5-Triphenyl-1,3,2-dioxathiolan-2-oxid

In einem mit Magnetrührer, Intensivkühler, Stickstoff-/Vakuumanschluss, Serumkappe und 500-ml-Tropftrichter (mit Druckausgleich) versehenen 4-l-Vierhalskolben wurden 22,3 g (76,9 mmol) (2R)-1,1,2-Triphenylethandiol in 1,5 l Dichlormethan vorgelegt. Nach Zugabe von 23,5 ml (169,2 mmol) frisch destilliertem Triethylamin kühlte man die Lösung auf 0°C ab und tropfte 5,6 ml (76,9 mmol) Thionylchlorid in 400 ml Dichlormethan zu. Nach beendeter Zugabe wurde noch sechs Stunden bei Rückfluß weitergerührt.

Die Lösung wurde am Rotationsverdampfer eingeengt, in 400 ml Tetrahydrofuran aufgenommen und der Niederschlag abgesaugt. Die organische Phase wurde am Rotationsverdampfer eingeengt, das Produkt über Säule chromatografiert (n-Hexan/Ethylacetat 5:1) und schließlich im Hochvakuum getrocknet. Die Ausbeute betrug 88%.

Gleichung 2(iii):

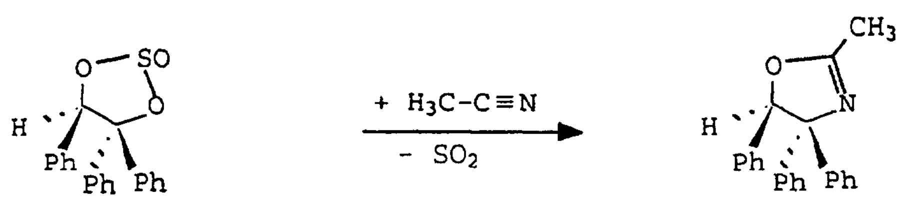


Stufe 2(iii): Herstellung von (5R)-2-Methyl-4,4,5-Triphenyloxazolin

In einem mit Magnetrührer, Stickstoff-/Vakuumanschluss und 25-ml-Tropftrichter (mit Druckausgleich) versehenen 250-ml-Dreihalskolben wurden 19 g (56,5 mmol) von (5R)-4,4,5-Triphenyl-1,3,2-dioxathiolan-2-oxid in 90 ml Acetonitril vorgelegt. Nach Abkühlen auf 0°C wurden 10 ml (113 mmol) Trifluormethansulfonsäure zugegeben. Anschließend rührte man noch sechzehn Stunden bei Raumtemperatur weiter. Das entstandene feste Nebenprodukt wurde abgesaugt, mit n-Hexan nachgewaschen, die Mutterlauge mit Natronlauge (2,5 N) auf einen pH-Wert von 8 gebracht und schließlich am Rotationsverdampfer vom organischen Lösungsmittel befreit. Nach Aufnehmen in Dichlormethan wurde die Produktlösung über Magnesiumsulfat getrocknet. Nach Entfernen des Dichlormethans konnte man das Produkt in einer Ausbeute von 64% isolieren.

Gleichung 2(iv):

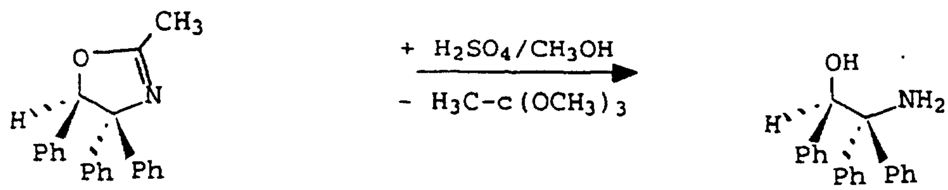


Stufe 2(iv): Herstellung von (1R)-2-Amino-1,2,2-triphenylethanol (entsprechend $R^7$ gleich Wasserstoff und $R^5$, $R^6$ und $R^8$ gleich Phenyl in der allgemeinen Formel des Ethanolamins in Gleichung 2; Verbindung 2g)

In einem mit Magnetrührer und Rückflußkühler versehenen 1-1-Einhalskolben legte man 11,2 g (35,7 mmol) von (5R)-2-Methyl-4,4,5-triphenyloxazolin in 340 ml 12%iger Schwefelsäure/Methanol-Lösung vor und hielt die Lösung über 10 Tage bei Siedetemperatur. Nach Zugabe von 250 ml Wasser und Abdestillieren des Methanols wurde der Feststoff in Diethylether (100 ml) extrahiert. Die wäßrige Phase wurde mit Natronlauge auf einen pH-Wert von 11 eingestellt und das Produkt mit Dichlormethan extrahiert. Nach Entfernung des Lösungsmittels und Umkristallisation aus Toluol erhielt man das Produkt (Verbindung 2g) in einer Ausbeute von 88%.

Gleichung 3:

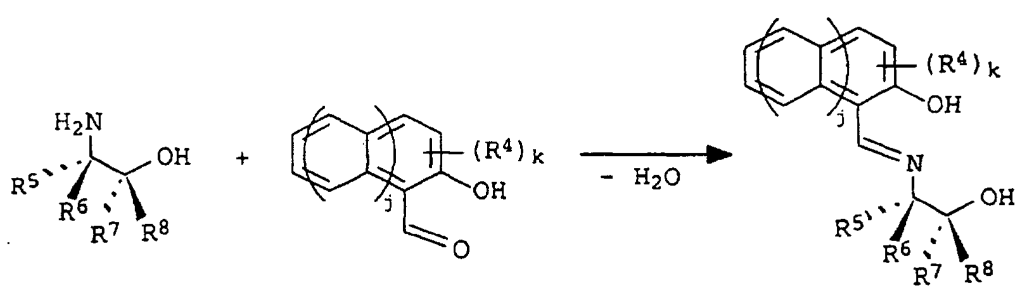


Stufe 3: Herstellung der Schiff'schen Base aus β-Hydroxynaphthylaldehyd und (2R)-2-Amino-1,1,2-triphenylethanol (entsprechend dem Podukt in Gleichung 3 mit $R^5$ gleich Wasserstoff, $R^6$ bis $R^8$ gleich Phenyl, j gleich 1 und k gleich 0; Verbindung 3a)

In einen mit Magnetrührer, zwei Septen und Stickstoff-/Vakuumanschluss 250-ml-Dreihalskolben wurden 4,34 g (15,0 mmol) (2R)-2-Amino-1,1,2-triphenylethanol und 4,3 g (30,3 mmol) wasserfreies Natriumsulfat vorgelegt. Dem Ansatz wurden mittels Spritze je 40 ml absolutes Methanol und absolutes Dichlormethan zugegeben.

15,75 mmol (1,05 Äquivalente) β-Hydroxynaphthylaldehyd (Fa. Fluka) wurden in einen 100-ml-Spitzkolben mit Septum und Stickstoff-/Vakuumanschluss vorgelegt und mit 50 ml absolutem Methanol versetzt, wobei sich die entstehende Lösung durch Phenolatbildung orange verfärbte.

Man kühlte die Lösung des (2R)-2-Amino-1,1,2-triphenylethanols auf -20°C ab und tropfte die Aldehyd-Lösung mittels Kanüle über das Septum sehr langsam zu. Dabei kam es zu einer spontanen Gelbfärbung der Reaktionsmischung. Die Temperatur der Mischung wurde über ein durch das Septum eingeführtes PT-Widerstandsthermometer kontrolliert und sollte eine einen Wert von -18°C nicht überschreiten.

Nach Beendigung der Aldehydzugabe wurde bei 0°C filtriert und das Filtrat bei 0°C durch Abkondensieren vom Lösungsmittel bereit. Der verbleibende Feststoff wurde aus Pentan umkristalliesiert und das erhaltene hellgelbe Produkt im Ölpumpenvakuum getrocknet.

Diastereomerengemische wurden mit unterschiedlichen Hexan : Essigestergemischen säulenchromatographisch voneinander getrennt.

Herstellung von 3-Tert.-butyl-2-hydroxybenzaldehyd

Gleichung 3(i):

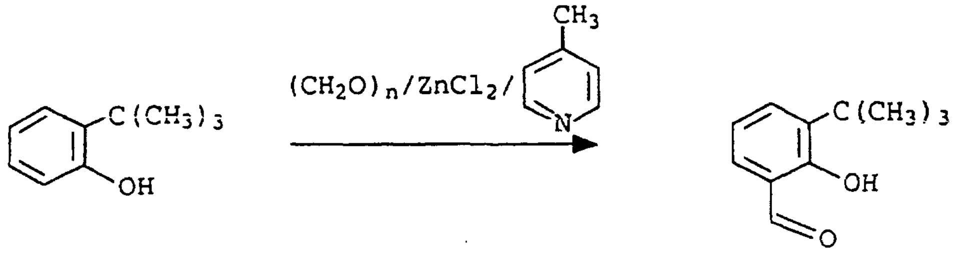


In einem mit Magnetrührer, Rückflußkühler und Stickstoff-/Vakuumanschluss versehenen 500-ml-Dreihalskolben wurden 9,0 g (300 mmol) Paraformaldehyd in 200 ml Toluol vorgelegt und 15,4 ml (100 mmol) 2-Tert.-butylphenol (Fa. Aldrich), 3,9 ml (40 mmol) 4-Methylpyridin und 1,89 g (10 mmol) Zinn(II)-chlorid zugegeben. Anschließend ließ man den Ansatz bei 95 °C für sechs Stunden weiterrühren. Das isolierte Produkt wurde in Diethylether aufgenommen, die Lösung mit Natriumchloridlösung gewaschen, über Natriumsulfat getrocknet und am Rotationsverdampfer eingeengt. Man erhielt das Produkt in einer Ausbeute von 39,5%.

Herstellung von 3-Tert.-butyl-2-hydroxy-5-nitrobenzaldehyd

Gleichung 3(ii):

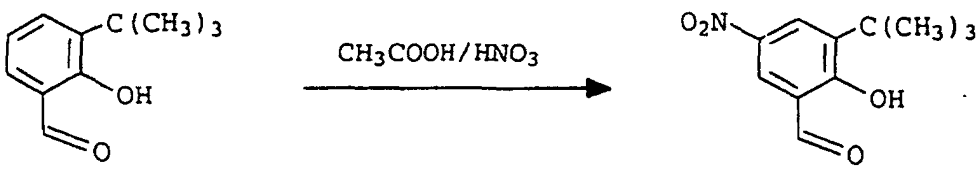


In einem mit Magnetrührer und Tropftricher versehenen 50-ml-Zweihalskolben wurden 5,0 g (28 mmol) 3-Tert.-butyl-2-hydroxybenzaldehyd in 8 ml Eisessig vorgelegt und 2,8 ml (68 mmol) Salpetersäure bei einer Temperatur unter 5°C zugegeben. Anschließend man den Ansatz eine Stunde bei Raumtemperatur weiterühren. Das Produkt wurde durch Ausfällen auf Eis isoliert und mit Wasser gewaschen. Nach Umkristallisation aus Ethanol wurde das Produkt getrocknet. Die Ausbeute betrug 64%.

In Tabelle 3 sind, außer für Verbindung 3a, auch für die analog hergestellten Verbindungen 3b bis 3h die entsprechenden Edukte aufgeführt. Die Formelbilder der Verbindungen 3a bis 3h sind im Anschluss an Tabelle 3 gezeigt.

Tabelle 3

| Edukte | Produktbezeichnung |
|---|---|
| Verbindung 2a/β-Hydroxynaphthylaldehyd (Fa. Aldrich/Fluka) | Verbindung 3a |
| Verbindung 2b/β-Hydroxynaphthylaldehyd (Fa. Aldrich/Fluka) | Verbindung 3b |
| Verbindung 2c/β-Hydroxynaphthylaldehyd (Fa. Aldrich/Fluka) | Verbindung 3c |
| Verbindung 2d/β-Hydroxynaphthylaldehyd (Fa. Aldrich/Fluka) | Verbindung 3d |
| Verbindung 2a/β-Hydroxybenzaldehyd (Fa. Aldrich/Fluka) | Verbindung 3e |
| Verbindung 2a/3-Tert.-butyl-2-hydroxybenzaldehyd (hergestellt gemäß Gleichung 3(i)) | Verbindung 3f |
| Verbindung 2g/2-Hydroxy-3,5-di (tert.-butyl)benzaldehyd (Fa. Aldrich/Lancaster) | Verbindung 3g |
| Verbindung 2a/2-Hydroxy-3-tert.-butyl-5-nitrobenzaldehyd (hergestellt gemäß Gleichung 3 (ii)) | Verbindung 3h |

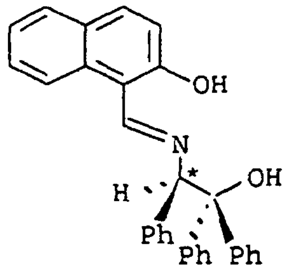

Verbindung 3a

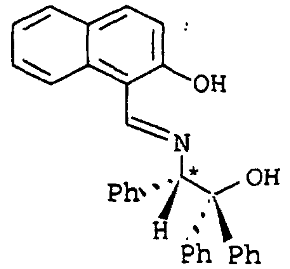

Verbindung 3b

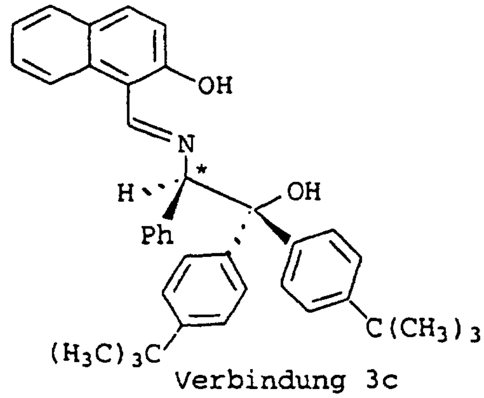

Verbindung 3c

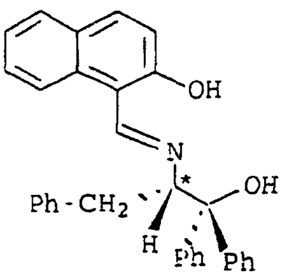

Verbindung 3d

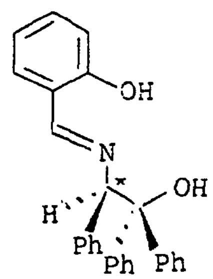

Verbindung 3e

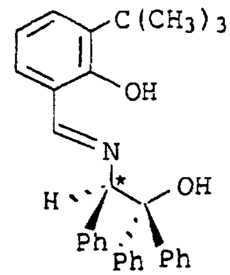

Verbindung 3f

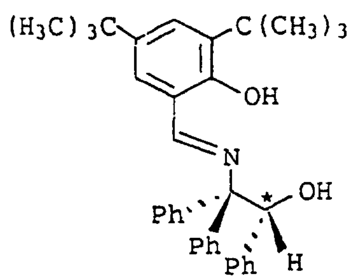

Verbindung 3g

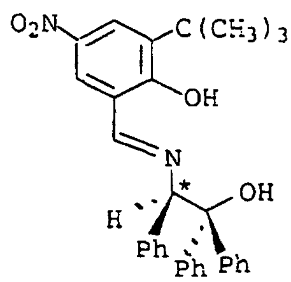

Verbindung 3h

Gleichung 4:

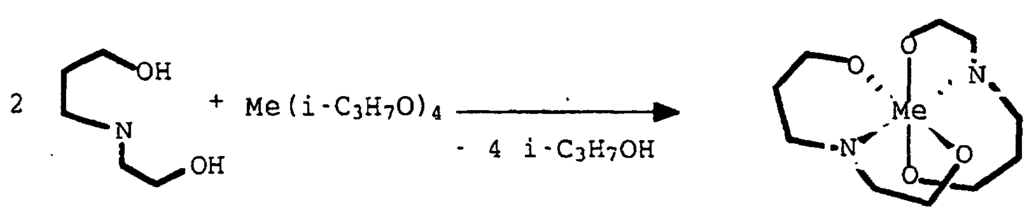


wobei für

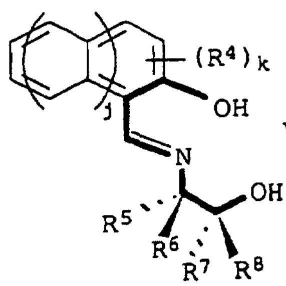 vereinfachend 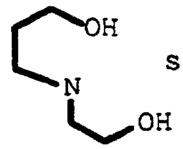 steht.

Stufe 4: Allgemeine Vorschrift zur Herstellung der chiralen $L_2$Ti-Komplexe (entsprechend Gleichung 4 mit Me gleich Titan)

In einen mit Magnetrührer, Septum und Rückflusskühler mit Stickstoff-/Vakuumanschluss ausgestatteten 50-ml-Zweihalskolben wurden 2,05 mmol (2,01 Äquivalente) des entsprechenden Liganden L vorgelegt und in 6 ml absolutem Dichlormethan gelöst. Nachdem man 0,3 ml (1,02 mmol) frisch destilliertes Titantetraisopropoxid (Fa. Aldrich) bei Raumtemperatur zugespritzt hatte, wurde die Lösung vier Stunden unter Rückfluss erhitzt.

Nach Entfernen des Lösungsmittels am Rotationsverdampfer wurde der verbleibende Feststoff entweder chromatographiert oder aus n-Hexan umkristallisiert.

Die durch Umsetzung mit den Verbindungen 3a bis 3h als Liganden L erhaltenen Metrallverbindungen 4a bis 4h entsprechend dem in Gleichung 4 gezeigten Aufbau

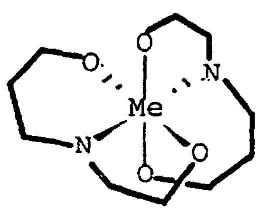 , worin 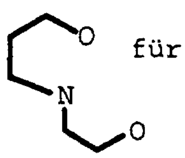 für 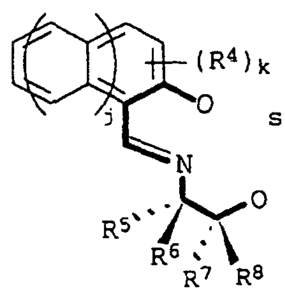 steht.

Die Bedeutung der Variablen k, j und $R^4$ bis $R^8$ in den einzelnen Metallverbindungen sind der Tabelle 4 zu entnehmen.

Tabelle 4

| Edukt | Produktbezeichnung | Bedeutung der Variablen |
|---|---|---|
| Verbindung 3a | Verbindung 4a | k=0, j=1, $R^5$ Wasserstoff,$R^6$ bis $R^8$ Phenyl |
| Verbindung 3b | Verbindung 4b | k=0, j=1, $R^6$ Wasserstoff, $R^5$, $R^7$ und $R^8$ Phenyl |
| Verbindung 3c | Verbindung 4c | k=0, j=1, $R^5$ Wasserstoff, $R^6$ Phenyl, $R^7$ und $R^8$ 4-Tert.-butyl-Phenyl |
| Verbindung 3d | Verbindung 4d | k=0, j=1, $R^5$ Benzyl, $R^6$ Wasserstoff, $R^7$ und $R^8$ Phenyl |
| Verbindung 3e | Verbindung 4e | k=0, j=0, $R^5$ Wasserstoff, $R^6$ bis $R^8$ Phenyl |
| Verbindung 3f | Verbindung 4f | k=1, j=0, $R^4$ 3-tert.-butyl, $R^5$ Wasserstoff, $R^6$ bis $R^8$ Phenyl |
| Verbindung 3g | Verbindung 4g | k=2, j=0, $R^4$ 3,5-di(tert.butyl), $R^8$ Wasserstoff, $R^5$ bis $R^7$ Phenyl |

Tabelle 4 (fortgesetzt)

| Edukt | Produktbezeichnung | Bedeutung der Variablen |
|---|---|---|
| Verbindung 3h | Verbindung 4h | k=2, j=0, $R^4$ 3-tert.-butyl-5-nitro, $R^5$ Wasserstoff, $R^6$ bis $R^8$ Phenyl |
| Verbindung 3i analog zu 3g, jedoch $R^5$ , $R^6$ Wasserstoff anstatt Phenyl | Verbindung 4i | k=2, j=0, $R^4$ 3,5-di(tert.butyl), $R^5$, $R^6$ und $R^8$ Wasserstoff, $R^7$ Phenyl |
| Verbindung 3k analog zu 3d, jedoch $R^5$, $R^6$ Phenyl und $R^8$ Wasserstoff anstatt Benzyl, Wasserstoff bzw. Phenyl | Verbindung 4k | k=0, j=1, $R^5$ bis $R^7$ Phenyl, $R^8$ Wasserstoff |

B) Messungen der "helikalen Verdrillungsstärke" oder "Helical Twisting Power" ("HTP"))

Vorbemerkung:

Der Einfluss des chiralen Dotierstoffs auf die nematische Phase wird durch die "helikale Verdrillungsstärke", die "Helical Twisting Power" ("HTP") beschrieben. Sie ist definiert zu:

$$HTP = \lim_{x_{ch} \to 0} \left( \frac{dp^{-1}}{dx_{ch}} \right)_{T*} = \lim_{x_{ch} \to 0} \bar{n} \left( \frac{d\lambda_R^{-1}}{dx_{ch}} \right)_{T*} ,$$

wobei bedeuten:

p : Ganghöhe der cholesterischen Helix

$x_{ch}$ : molarer Anteil (Molenbruch) des chiralen Dotierstoffs

$\bar{n}$ : mittlerer Brechungsindex der cholesterischen Phase, für flüssigkristalline Phasen in der Regel zu ca. 1,6 angenommen

$\lambda_R$ : Wellenlänge des reflektierten Lichts

T* : reduzierte Temperatur, d.h. Quotient aus Messtemperatur $T_M$ und Klärtemperatur $T_c$

Für kleine Werte von $x_{ch}$ ergibt sich in guter Näherung eine lineare Abhängigkeit des Wertes von $p^{-1}$ bzw. $\lambda_R^{-1}$ von $x_{ch}$, so dass anstelle des Grenzwertes mit ausreichender Genauigkeit der Quotient selbst herangezogen werden kann. In diesem Konzentrationsbereich lässt sich der HTP-Wert durch nur eine $\lambda_R$-Messung bestimmen, wenn der Wert von $\lambda_R^{-1}$ für $X_{ch} = 0$ zu Null angenommen wird. Damit vereinfacht sich die obige Gleichung zu

$$HTP = \lim_{x_{ch} \to 0} \bar{n} \left( \frac{d\lambda_R^{-1}}{dx_{ch}} \right)_{T*} \approx \bar{n} \left( \frac{d\lambda_R^{-1}}{dx_{ch}} \right)_{T*} \approx \bar{n} \left( \frac{\Delta\lambda_R^{-1}}{\Delta x_{ch}} \right)_{T*} =$$

$$= \bar{n} \left( \frac{\lambda_R^{-1}(x_{ch}) - \lambda_R^{-1}(0)}{x_{ch} - 0} \right)_{T*} = \bar{n} \left( \frac{\lambda_R^{-1}(x_{ch})}{x_{ch}} \right)_{T*}$$

Als chirale Dotierstoffe ("DS") wurden die chiralen Metallverbindungen 4a bis 4g sowie zu Vergleichszwecken in einigen Fällen die diesen Verbindungen zugrundeliegenden chiralen Liganden (Verbindungen 3a bis 3d) untersucht.

Als flüssigkristallines (nematische) Basismaterial ("LC") für die Bestimmung der HTP-Werte wurde entweder

die Verbindung nachfolgender Formel ("LC1")

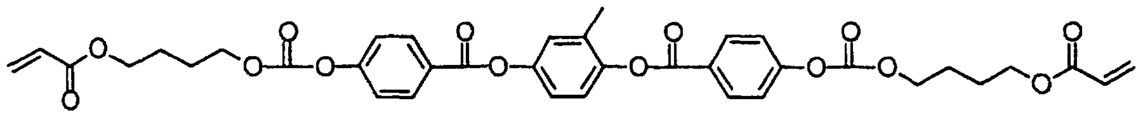

(LC1)

oder das kommerziell erhältliche flüssigkristalline Produkt ZLI 1840 (Fa. Merck) verwendet. Die Herstellung von LC1 ist der Schrift WO 97/00600 (Beispiel 6) zu entnehmen. Die Ergebnisse der HTP-Wert-Messungen sind in nachfolgender Tabelle 5 aufgeführt.

Tabelle 5

| DS | LC | HTP-Wert | Drehsinn |
|---|---|---|---|
| 3a | LC1 | $2\mu m^{-1}$ | rechts |
| 4a | LC1 | $15\mu m^{-1}$ | rechts |
| 3b | ZLI 1840 | $3\mu m^{-1}$ | links |
| 4b | ZLI 1840 | $43\mu m^{-1}$ | links |
| 3c | LC1 | $< 2\mu m^{-1}$ | nicht bestimmbar |
| 4c | LC1 | $16\mu m^{-1}$ | rechts |
| 3d | LC1 | 6µm-1 | rechts |
| 4d | LC1 | $9\mu^{m-1}$ | rechts |
| 4e | ZLI 1840 | $20\mu m^{-1}$ | rechts |
| 4f | ZLI 1840 | $2\mu m^{-1}$ | nicht bestimmbar |
| 4g | LC1 | $23\mu m^{-1}$ | links |
| 3h | LC1 | $< 2\mu m^{-1}$ | nicht bestimmbar |
| 4i | LC1 | $23\mu m^{-1}$ | nicht bestimmt |
| 4k | LC1 | $50\mu m^{-1}$ | nicht bestimmt |

**Patentansprüche**

**1.** Verwendung von chiralen, ungeladene Verbindungen der allgemeinen Formel Ia

$$[(P^1\text{-}Y^1\text{-}A^1\text{-}Y^2\text{-}M^1\text{-}Y^3\text{-})_nL]_2Me \qquad \text{(Ia)}$$

oder Ib

$$[(P^1\text{-}Y^1\text{-}A^1\text{-}Y^2\text{-}M^1\text{-}Y^3\text{-})_nL]Me(L'(\text{-}Y^6\text{-}M^2\text{-}Y^5\text{-}A^2\text{-}Y^4\text{-}P^2)_{n'})_m \qquad \text{(Ib),}$$

in welchen unabhängig voneinander bedeuten

$P^1$, $P^2$ Wasserstoff, $C_1$-$C_{12}$-Alkyl, eine polymerisierbare oder zur Polymerisation geeignete Gruppe oder ein Rest, welcher eine polymerisierbare oder zur Polymerisation geeignete Gruppe trägt,

$Y^1$ bis $Y^6$ eine chemische Einfachbindung, -O-, -S-, -CO-, -CO-O-, -O-CO-, -CO-N(R)-, -(R)N-CO-, -O-CO-O-, -O-CO-N(R)-, -(R)N-CO-O- oder -(R)N-CO-N(R)-,

R Wasserstoff oder $C_1$-$C_4$-Alkyl,

$A^1$, $A^2$ Spacer mit ein bis 30 Kohlenstoffatomen,

$M^1$, $M^2$ mesogene Gruppen,

n', n Werte von 0 oder 1

m ein Wert von 1, 2 oder 3,

wobei die m Gruppierungen $L'(-Y^6-M^2-Y^5-A^2-Y^4-P^2)_{n'}$ in Formel Ib unterschiedlich sein können,

Me ein Übergangsmetall der vierten, fünften oder sechsten Periode, mit Ausnahme von Technetium, Silber, Cadmium, Gold, Quecksilber und der Lanthanoide, oder ein Hauptgruppenelement der Gruppe 14 (nach IUPAC), mit Ausnahme von Kohlenstoff und Blei,

L ein dreizähniger Ligand der Formel II

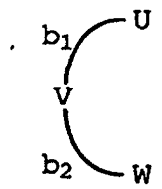

(II),

in welcher bedeuten

U, V, W stickstoff-, sauerstoff-, phosphor- oder schwefelhaltige Gruppierungen, welche über ein Stickstoff-, Sauerstoff-, Phosphor- bzw. Schwefelatom mit mindestens einem freien Elektronenpaar verfügen, über welches die Koordination an das Zentrum Me erfolgt,

$b_1$, $b_2$ Alkylen- oder Alkenylenbrücken mit zwei oder drei Kohlenstoffatomen, welche an das Stickstoff-, Sauerstoff-, Phosphor- bzw. Schwefelatom der Gruppierungen U und V (für $b_1$) bzw. der Gruppierungen V und W (für $b_2$) gebunden sind und welche im Falle einer $C_2$-Alkenylenbrücke mit bis zu zwei, in den übrigen Fällen mit bis zu vier organischen Resten mit bis zu 12 Kohlenstoffatomen substituiert sein können, und in welchen zwei benachbarte Kohlenstoffatome der Alkylen- oder Alkenylenbrücke Bestandteil eines unsubstituierten oder substituierten, gegebenenfalls benzanellierten Benzolringes sein können, und

L' ein organischer Rest mit bis zu 12 Kohlenstoffatomen,

als Dotierstoffe für flüssigkristalline Materialien.

**2.** Verwendung von Verbindungen der Formeln Ia oder Ib nach Anspruch 1, in welchen

Me für ein Übergangsmetall ausgewählt der Gruppe bestehend aus Titan, Chrom, Mangan, Eisen, Kobalt, Kupfer, Zirkonium, Molybdän, Ruthenium, Rhodium und Wolfram oder für Silicium steht.

**3.** Verwendung von Verbindungen der Formeln Ia oder Ib nach Anspruch 1 oder 2, in welchen in Formel II gemäß Anspruch 1

V für eine stickstoffhaltige Gruppierung steht.

**4.** Verwendung von Verbindungen der Formeln Ia oder Ib nach Anspruch 3, in welchen in Formel II gemäß Anspruch 1

U und W entweder beide für eine sauerstoff- oder phosphorhaltige Gruppierung stehen oder eine der Gruppierungen U und W für eine sauerstoff- und die andere für eine schwefelhaltige Gruppierung steht.

**5.** Verwendung von Verbindungen der Formel Ib nach einem oder mehreren der Ansprüche 1 bis 4, in welchen n' für alle m Gruppierungen $L'(-Y^6-M^2-Y^5-A^2-Y^4-P^2)_{n'}$ den Wert von 0 annimmt.

**6.** Verbindungen der allgemeinen Formel IIIa

$$[(P^{1'}-Y^1-A^1-Y^2-M^1-Y^3-)L]_2Me \qquad \text{(IIIa)}$$

und IIIb

$$[(P^{1'}-Y^1-A^1-Y^2-M^1-Y^3-)L]Me(L'\ (-Y^6-M^2-Y^5-A^2-Y^4-P^{2'})_{n'})_m \qquad \text{(IIIb),}$$

in welchen unabhängig voneinander bedeuten

$P^{1'}$, $P^{2'}$ eine polymerisierbare oder zur Polymerisation geeignete Gruppe oder ein Rest, welcher eine polymerisierbare oder zur Polymerisation geeignete Gruppe trägt,
$Y^1$ bis $Y^6$ eine chemische Einfachbindung, -O-, -S-, -CO-, -CO-O-, -O-CO-, -CO-N(R)-, -(R)N-CO-, -O-CO-O-, - O-CO-N(R)-, -(R)N-CO-O- oder -(R)N-CO-N(R)-,
R Wasserstoff oder $C_1$-$C_4$-Alkyl,
$A^1$, $A^2$ Spacer mit ein bis 30 Kohlenstoffatomen,
$M^1$, $M^2$ mesogene Gruppen,
n' ein Wert von 0 oder 1
m ein Wert von 1, 2 oder 3,

wobei die m Gruppierungen $L'(-Y^6-M^2-Y^5-A^2-Y^4-P^2)_{n'}$ in Formel IIIb unterschiedlich sein können,

Me ein Übergangsmetall der vierten, fünften oder sechsten Periode, mit Ausnahme von Technetium, Silber, Cadmium, Gold, Quecksilber und der Lanthanoide, oder ein Hauptgruppenelement der Gruppe 14 (nach IUPAC), mit Ausnahme von Kohlenstoff und Blei,

L ein dreizähniger Ligand der Formel II

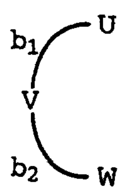

(II),

in welcher bedeuten

U, V, W stickstoff-, sauerstoff-, phosphor- oder schwefelhaltige Gruppierungen, welche über ein Stickstoff-, Sauerstoff-, Phosphor- bzw. Schwefelatom mit mindestens einem freien Elektronenpaar verfügen, über welches die Koordination an das Zentrum Me erfolgt,

$b_1$, $b_2$ Alkylen- oder Alkenylenbrücken mit zwei oder drei Kohlenstoffatomen, welche an das Stickstoff-, Sauerstoff-, Phosphor- bzw. Schwefelatom der Gruppierungen U und V (für $b_1$) bzw. der Gruppierungen V und W (für $b_2$) gebunden sind und welche im Falle einer $C_2$-Alkenylenbrücke mit bis zu zwei, in den übrigen Fällen mit bis zu vier organischen Resten mit bis zu 12 Kohlenstoffatomen substituiert sein können, und in welchen zwei benachbarte Kohlenstoffatome der Alkylen- oder Alkenylenbrücke Bestandteil eines unsubstituierten oder substituierten, gegebenenfalls benzanellierten Benzolringes sein können, und

L' ein organischer Rest mit bis zu 12 Kohlenstoffatomen.

**7.** Verbindungen der Formeln IIIa und IIIb nach Anspruch 6, in welchen

Me für ein Übergangsmetall ausgewählt der Gruppe bestehend aus Titan, Chrom, Mangan, Eisen, Kobalt, Kupfer, Zirkonium, Molybdän, Ruthenium, Rhodium und Wolfram oder für Silicium steht.

**8.** Verbindungen der Formeln IIIa und IIIb nach Anspruch 6 oder 7, in welchen in Formel II gemäß Anspruch 6

V für eine stickstoffhaltige Gruppierung steht.

**9.** Verbindungen der Formeln IIIa und IIIb nach Anspruch 8, in welchen in Formel II gemäß Anspruch 6

U und W entweder beide für eine sauerstoff- oder phosphorhaltige Gruppierung stehen oder eine der Gruppierungen U und V für eine sauerstoff- und die andere für eine schwefelhaltige Gruppierung steht.

**10.** Verbindungen der Formel IIIb nach einem oder mehreren der Ansprüche 6 bis 9, in welchen n' für alle m Gruppierungen $L'(-Y^6-M^2-Y^5-A^2-Y^4-P^2)_{n'}$ den Wert von 0 annimmt.

**11.** Flüssigkristalline Materialien, enthaltend mindestens eine Verbindung der Formel Ia oder Ib gemäß der Verwendung nach einem oder mehreren der Ansprüche 1 bis 5 oder enthaltend mindestens eine Verbindung der Formel IIIa oder IIIb gemäß einem oder mehreren der Ansprüche 6 bis 10.

## Claims

**1.** The use of chiral, uncharged compounds of the general formula Ia

$$[(P^1-Y^1-A^1-Y^2-M^1-Y^3-)_nL]_2Me \quad (Ia)$$

or Ib

$$[(P^1-Y^1-A^1-Y^2-M^1-Y^3-)_nL]Me(L'(-Y^6-M^2-Y^5-A^2-Y^4-P^2)_{n'})_m \quad (Ib),$$

in which, independently of one another,

$P^1$ and $P^2$ are hydrogen, $C_1$-$C_{12}$-alkyl, a group which is polymerizable or suitable for polymerization, or a radical which carries a group which is polymerizable or suitable for polymerization,

$Y^1$ to $Y^6$ are a single chemical bond, -O-, -S-, -CO-, -CO-O-, - O-CO-, -CO-N(R)-, -(R)N-CO-,-O-CO-O-, -O-CO-$_N$(R)-, -(R)N-CO-O- or -(R)N-CO-N(R)-,

R is hydrogen or $C_1$-$C_4$-alkyl,

$A^1$ and $A^2$ are spacers having from one to 30 carbon atoms,

$M^1$ and $M^2$ are mesogenic groups,

n' and n are values of 0 or 1,

m is a value of 1, 2 or 3,

where the m $L'(-Y^6-M^2-Y^5-A^2-Y^4-P^2)_n$, groups in the formula Ib may be different,

Me is a transition metal from the fourth, fifth or sixth period, with the exception of technetium, silver, cadmium, gold, mercury and the lanthanoids, or a main-group element from group 14 (in the IUPAC system), with the exception of carbon and lead,

L is a tridentate ligand of the formula II

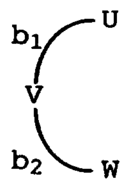

(II),

in which

U, V and W are nitrogen-, oxygen-, phosphorus- or sulfur-containing groups which contain a nitrogen, oxygen, phosphorus or sulfur atom respectively having at least one free electron pair via which the coordination to the center Me takes place,

$b_1$ and $b_2$ are alkylene or alkenylene bridges having two or three carbon atoms which are bonded to the nitrogen, oxygen, phosphorus or sulfur atom of the groups U and V (for $b_1$) or of the groups V and W (for $b_2$) and which, in the case of a $C_2$-alkenylene bridge, may be substituted by up to two, in the other cases by up to four organic radicals having up to 12 carbon atoms, and in which two adjacent carbon atoms in the alkylene or alkenylene bridge may be part of an unsubstituted or substituted, simple or benzo-fused benzene ring, and

L' is an organic radical having up to 12 carbon atoms,

as dopants for liquid-crystalline materials.

**2.** The use of a compound of the formula Ia or Ib as claimed in claim 1 in which

Me is a transition metal selected from the group consisting of titanium, chromium, manganese, iron, cobalt, copper, zirconium, molybdenum, ruthenium, rhodium and tungsten or is silicon.

**3.** The use of a compound of the formula Ia or Ib as claimed in claim 1 or 2 in which, in the formula II in claim 1,

V is a nitrogen-containing group.

**4.** The use of a compound of the formula Ia or Ib as claimed in claim 3 in which, in the formula II in claim 1,

U and W are either both an oxygen- or phosphorus-containing group or one of the groups U and W is an oxygen-containing group and the other is a sulfur-containing group.

**5.** The use of a compound of the formula Ib as claimed in one or more of claims 1 to 4 in which

n' adopts the value for all m $L'(-Y^6-M^2-Y^5-A^2-Y^4-P^2)_{n'}$ groups.

**6.** A compound of the general formula IIIa

$$[(P^{1'}-Y^1-A^1-Y^2-M^1-Y^3-)L]_2Me \qquad (IIIa)$$

or IIIb

$$[(P^{1'}-Y^1-A^1-Y^2-M^1-Y^3-)L]Me(L'(-Y^6-M^2-Y^5-A^2-Y^4-Y^{2'})_{n'})_m \qquad (IIIb),$$

in which, independently of one another,

$P^{1'}$ and $P^{2'}$ are a group which is polymerizable or suitable for polymerization, or a radical which carries a group which is polymerizable or suitable for polymerization,

$Y^1$ to $Y^6$ are a single chemical bond, -O-, -S-, -CO-, -CO-O-, - O-CO-, -CO-N(R)-, -(R)N-CO-,-O-CO-O-, -O-CO-N(R)-, -(R)N-CO-O- or -(R)N-CO-N(R)-,

R is hydrogen or $C_1$-$C_4$-alkyl,

$A^1$ and $A^2$ are spacers having from one to 30 carbon atoms,

$M^1$ and $M^2$ are mesogenic groups,

n' is a value of 0 or 1,

m is a value of 1, 2 or 3,

where the m L' $(-Y^6-M^2-Y^5-A^2-Y^4-P^{2'})_{n'}$ groups in the formula IIIb may be different,

Me is a transition metal from the fourth, fifth or sixth period, with the exception of technetium, silver, cadmium, gold, mercury and the lanthanoids, or a main-group element from group 14 (in the IUPAC system), with the exception of carbon and lead,

L is a tridentate ligand of the formula II

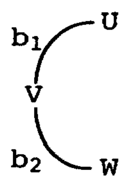

(II),

in which

U, V and W are nitrogen-, oxygen-, phosphorus- or sulfur-containing groups which contain a nitrogen, oxygen, phosphorus or sulfur atom respectively having at least one free electron pair via which the coordination to the center Me takes place,

$b_1$ and $b_2$ are alkylene or alkenylene bridges having two or three carbon atoms which are bonded to the nitrogen, oxygen, phosphorus or sulfur atom of the groups U and V (for $b_1$) or of the groups V and W (for $b_2$) and which, in the case of a $C_2$-alkenylene bridge, may be substituted by up to two, in the other cases by up to four organic radicals having up to 12 carbon atoms, and in which two adjacent carbon atoms in the alkylene or alkenylene bridge may be part of an unsubstituted or substituted, simple or benzo-fused benzene ring, and

L' is an organic radical having up to 12 carbon atoms.

**7.** A compound of the formula IIIa or IIIb as claimed in claim 6 in which

Me is a transition metal selected from the group consisting of titanium, chromium, manganese, iron, cobalt, copper, zirconium, molybdenum, ruthenium, rhodium and tungsten or is silicon.

**8.** A compound of the formula IIIa or IIIb as claimed in claim 6 or 7 in which, in the formula II in claim 6,

V is a nitrogen-containing group.

**9.** A compound of the formula IIIa or IIIb as claimed in claim 8 in which, in the formula II in claim 6,

U and W are either both an oxygen- or phosphorus-containing group or one of the groups U and V is an oxygen-containing group and the other is a sulfur-containing group.

**10.** A compound of the formula IIIb as claimed in one or more of claims 6 to 9 in which n' adopts the value 0 for all m $L'(-Y^6-M^2-Y^5-A^2-Y^4-P^2)_n$, groups.

**11.** A liquid-crystalline material comprising at least one compound of the formula Ia or Ib as used in one or more of claims 1 to 5 or comprising at least one compound of the formula IIIa or IIIb as claimed in one or more of claims 6 to 10.

## Revendications

**1.** Utilisation de composés chiraux non chargés de formule générale Ia

$$[(P^1\text{-}Y^1\text{-}A^1\text{-}Y^2\text{-}M^1\text{-}Y^3\text{-})_nL]_2Me \qquad (Ia)$$

ou Ib

$$[(P^1\text{-}Y^1\text{-}A^1\text{-}Y^2\text{-}M^1\text{-}Y^3\text{-})_nL]Me(L'\ (\text{-}Y^6\text{-}M^2\text{-}Y^5\text{-}A^2\text{-}Y^4\text{-}P^2_{n'})_m \qquad (Ib)$$

dans lesquelles, à chaque fois indépendamment les uns des autres,

$P^1$, $P^2$ représentent un atome d'hydrogène, un groupe alkyle en $C_1$ à $C_{12}$, un groupe polymérisable ou approprié pour la polymérisation ou un groupe qui porte un groupe polymérisable ou approprié pour la polymérisation,
$Y^1$ à $Y^6$ représentent une liaison chimique simple, -O-, - S-, -CO-, -CO-O-, -O-CO-, -CO-N(R)-, -(R)N-CO-, -O-CO-O-, -O-CO-N(R)-, -(R)N-CO-O- ou - (R) N-CO-N (R) -,
R représente un atome d'hydrogène ou un groupe alkyle en $C_1$ à $C_4$,
$A^1$, $A^2$ représentent des espaceurs possédant 1 à 30 atomes de carbone,
$M^1$, $M^2$ représentent des groupes mésogènes,
n', n valent 0 ou 1
m vaut 1, 2 ou 3,

les groupements m $L'\ (\text{-}Y^6\text{-}M^2\text{-}Y^5\text{-}A^2\text{-}Y^4\text{-}P^2)_{n'}$ dans formule Ib pouvant être différents,

Me représente un métal de transition des périodes quatre, cinq ou six de la Classification Périodique des Eléments, à l'exception du technétium, de l'argent, du cadmium, de l'or, du mercure et des lanthanoïdes, ou un élément du groupe principal du groupe 14 (selon l'IUPAC), à l'exception du carbone et du plomb,
L représente un ligand tridenté de formule II

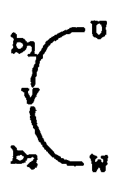

(II),

dans laquelle,

- U, V, W représentent des groupements contenant de l'azote, de l'oxygène, du phosphore ou du soufre, lesquels possèdent un atome d'azote, d'oxygène, de phosphore ou de soufre avec au moins une paire d'électrons libres, par l'intermédiaire de laquelle est réalisée la coordination sur le centre Me,
- $b_1$, $b_2$ représentent des ponts alkylène ou alcényle comprenant deux ou trois atomes de carbone, lesquels sont liés à l'atome d'azote, d'oxygène, de phosphore ou de soufre des groupements U et V (pour $b_1$) ou des groupements V et W (pour $b_2$), et lesquels peuvent être substitués, dans le cas d'un pont alcényle en $C_2$, par jusqu'à deux, dans les autres cas par jusqu'à quatre groupes organiques possédant jusqu'à 12 atomes de carbone, et dans lesquels deux atomes de carbone vicinaux du pont alkylène ou alcényle peuvent faire partie d'un noyau benzénique non substitué ou substitué, éventuellement benzo- condensé, et
- L' représente un groupe organique possédant jusqu'à 12 atomes de carbone,

en tant que dopants pour des matières cristallines liquides.

**2.** Utilisation de composés de formules Ia ou Ib selon la revendication 1, dans lesquels

Me représente le silicium ou un métal de transition choisi dans le groupe formé par le titane, le chrome, le manganèse, le fer, le cobalt, le cuivre, le zirconium, le molybdène, le ruthénium, le rhodium et le tungstène.

**3.** Utilisation de composés de formules Ia ou Ib selon la revendication 1 ou 2, dans lesquels, dans la formule II selon la revendication 1,

V représente un groupement contenant de l'azote.

**4.** Utilisation de composés de formules Ia ou Ib selon la revendication 3, dans lesquels, dans la formule II selon la revendication 1,

U et W représentent tous les deux un groupement contenant de l'oxygène ou du phosphore ou l'un des groupements U et W représente un groupement contenant de l'oxygène et l'autre un groupement contenant du soufre.

**5.** Utilisation de composés de formule Ib selon l'une ou plusieurs des revendications 1 à 4, dans lesquels

n' prend la valeur 0 pour tous les groupements L' $(-Y^6-M^2-Y^5-A^2-Y^4-P^2)_{n'}$ .

**6.** Composés de formule générale IIIa

$$[(P^{1'}-Y^1-A^1-Y^2-M^1-Y^3-)L]_2Me \qquad \text{(IIIa)}$$

et IIIb

$$[(P^{1'}-Y^1-A^1-Y^2-M^1-Y^3-)L]Me(L'(-Y^6-M^2-Y^5-A^2-Y^4-P^{2'})_{n'})_m \qquad \text{(IIIb),}$$

dans lesquelles, à chaque fois indépendamment les uns des autres,

- $P^{1'}$, $P^{2'}$ représentent un groupe polymérisable ou approprié pour la polymérisation ou un groupe, qui porte un groupe polymérisable ou approprié pour la polymérisation,
- $Y^1$ à $Y^6$ représentent une liaison chimique simple, -O-, - S-, -CO-, -CO-O-, -O-CO-, -CO-N(R)-, -(R)N-CO-, -O-CO-O-, -O-CO-N(R)-, -(R)N-CO-O- ou - (R) N-CO-N (R) -,
- R représente un atome d'hydrogène ou un groupe alkyle en $C_1$ à $C_4$,
- $A^1$, $A^2$ représentent des espaceurs possédant 1 à 30 atomes de carbone,
- $M^1$, $M^2$ représentent des groupes mésogènes,
- n' vaut 0 ou 1

m vaut 1, 2 ou 3,

les groupements m de L' $(-Y^6-M^2-Y^5-A^2-Y^4-P^{2'})_{n'}$ dans formule IIIb pouvant être différents,

Me représente un métal de transition des périodes quatre, cinq ou six de la Classification Périodique des Eléments, à l'exception du technétium, de l'argent, du cadmium, de l'or, du mercure et des lanthanoïdes, ou un élément du groupe principal du groupe 14 (selon l'IUPAC), à l'exception du carbone et du plomb,

L représente un ligand tridenté de formule II

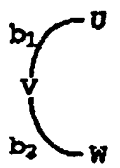

(II),

dans laquelle

U, V, W représentent des groupements contenant de l'azote, de l'oxygène, du phosphore ou du soufre, lesquels possèdent un atome d'azote, d'oxygène, de phosphore ou de soufre avec au moins une paire d'électrons libres, par l'intermédiaire de laquelle est réalisée la coordination sur le centre Me,

$b_1$, $b_2$ représentent des ponts alkylène ou alcényle comprenant deux ou trois atomes de carbone, lesquels sont liés à l'atome d'azote, d'oxygène, de phosphore ou de soufre des groupements U et V (pour $b_1$) ou des groupements V et W (pour $b_2$), et lesquels peuvent être substitués, dans le cas d'un pont alcényle en $C_2$, par jusqu'à deux, dans les autres cas par jusqu'à quatre groupes organiques possédant jusqu'à 12 atomes de carbone, et dans lesquels deux atomes de carbone vicinaux du pont alkylène ou alcényle peuvent faire partie d'un noyau benzénique non substitué ou substitué, éventuellement benzo- condensé, et

L' représente un groupe organique possédant jusqu'à 12 atomes de carbone.

**7.** Composés de formules IIIa et IIIb selon la revendication 6, dans lesquels

Me représente le silicium ou un métal de transition choisi dans le groupe formé par le titane, le chrome, le manganèse, le fer, le cobalt, le cuivre, le zirconium, le molybdène, le ruthénium, le rhodium et le tungstène.

**8.** Composés de formules IIIa et IIIb selon la revendication 6 ou 7, dans lesquels, dans la formule II selon la revendication 6,

V représente un groupement contenant de l'azote.

**9.** Composés de formules IIIa et IIIb selon la revendication 8, dans lesquels, dans la formule II selon la revendication 6,

U et W représentent tous les deux un groupement contenant de l'oxygène ou du phosphore, ou l'un des groupements U et W représente un groupement contenant de l'oxygène et l'autre un groupement contenant du soufre.

**10.** Composés de formule IIIb selon l'une ou plusieurs des revendications 6 à 9, dans lesquelles

n' prend la valeur 0 pour tous les groupements m L' $(-Y^6-M^2-Y^5-A^2-Y^4-P^{2'})_{n'}$ .

**11.** Matières cristallines liquides, contenant au moins un composé de formule Ia ou Ib selon l'utilisation conformément à l'une ou plusieurs des revendications 1 à 5, ou contenant au moins un composé de formule IIIa ou IIIb selon l'une ou plusieurs des revendications 6 à 10.